(19) **Europäisches Patentamt / European Patent Office / Office européen des brevets**

(11) **EP 4 078 272 B1**

(12) **EUROPEAN PATENT SPECIFICATION**

(45) Date of publication and mention
of the grant of the patent:
**25.03.2026 Bulletin 2026/13**

(21) Application number: **20821057.5**

(22) Date of filing: **08.10.2020**

(51) International Patent Classification (IPC):
**G02B 27/01** $^{(2006.01)}$ **G02B 27/28** $^{(2006.01)}$

(52) Cooperative Patent Classification (CPC):
**G02B 27/0101; G02B 27/286;** G02B 2027/012

(86) International application number:
**PCT/HU2020/050046**

(87) International publication number:
**WO 2021/099813 (27.05.2021 Gazette 2021/21)**

(54) **METHOD FOR IMPROVING THE IMAGE QUALITY OF A HUD SYSTEM AND A HUD SYSTEM COMPRISING A POLARIZING ELEMENT**

VERFAHREN ZUR VERBESSERUNG DER BILDQUALITÄT EINES HUD-SYSTEMS UND EIN POLARISIERENDES ELEMENT ENTHALTENDES HUD-SYSTEM

PROCÉDÉ D'AMÉLIORATION DE LA QUALITÉ D'IMAGE D'UN SYSTÈME HUD ET SYSTÈME HUD COMPRENANT UN ÉLÉMENT POLARISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2019 HU 1900393**

(43) Date of publication of application:
**26.10.2022 Bulletin 2022/43**

(73) Proprietor: **Budapesti Müszaki és Gazdaságtudományi Egyetem**
**1111 Budapest (HU)**

(72) Inventors:
• **SULYOK, Ábel**
**2040 Budaörs (HU)**
• **KOPPA, Pál**
**2040 Budaörs (HU)**

(74) Representative: **Kacsuk, Zsófia**
**Üteg u. 11/a**
**1139 Budapest (HU)**

(56) References cited:
EP-A1- 2 631 687    US-B2- 7 123 418
US-B2- 7 839 574

## Description

The present invention relates to a method for improving the image quality of a Head-up display (HUD) system, the HUD system comprises an image display device and a reflecting element having a partially transmissive first reflective surface and at least one partially transmissive second reflective surface parallel thereto, wherein the second reflective surface is arranged on the side of the first reflective surface opposite the image display device and wherein the reflecting element is adapted to produce reflected light beams from incident light beams which are starting from the points of the image generated by the image display device and arriving at the reflective surfaces and to reflect a portion of the reflected light beams toward a design detection point.

The invention further relates to a HUD system comprising a polarizing element according to the invention.

The HUD was originally developed for the military with the aim of keeping the pilot watching the route and not having to look in any other direction. In contrast, with a traditional head-down display (HDD), one must look regularly at the dashboard and focus suddenly close after looking into the distance, which can be tiring. The head-up display also solves the problem of having to focus close by making a distant image plane. Originally military technology, it has now also appeared in the automotive industry and became available to civilian users. By projecting an image onto a reflective element, in other words combiner (such as a special windscreen or a special plate specially equipped for this purpose), the driver is able to obtain information while driving about speed, navigation, radio settings, error messages and other driving information which he or she would normally have to find by looking at the dashboard. In addition, dangerous situations (e.g. roadblocks, road bends in poor visibility conditions, pedestrians stepping off sidewalks, etc.) can also be visually predicted. Currently, the HUD system is found mainly in luxury cars, but the range of applications is expanding rapidly.

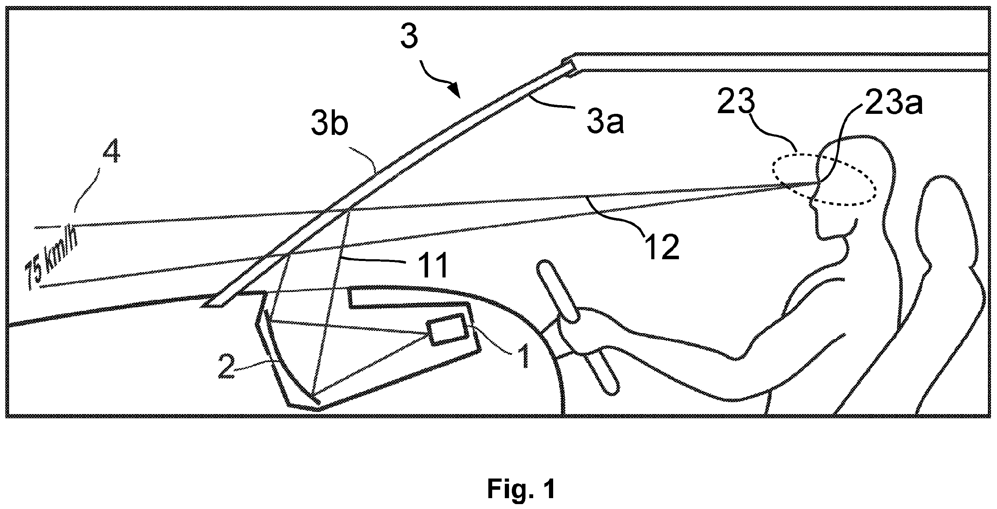

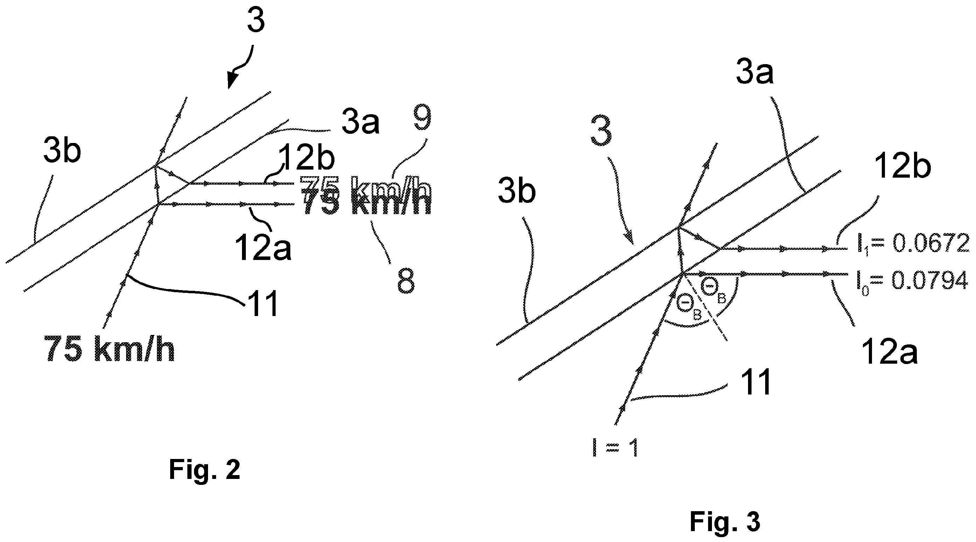

The most common HUD solution installed in a vehicle (see Fig. 1) essentially consists of an image display device 1 and an aspherical mirror 2, where the reflecting element 3 is the windscreen. In this embodiment, the aspherical mirror 2 is intended to correct the distortion of the reflecting element 3 curved due to the windscreen design and to focus the dispersing light beams of the image display device 1, the latter being a digital projector so as to form a distant image plane and create a projected image 4 which the driver sees at a comfortable distance as "floating" in front of the vehicle. Figures 2 and 3 show an enlarged view of the incident light beam 11 coming from the image display device 1 reflected from both the first reflective surface 3a and the second reflective surface 3b of the reflecting element 3, thereby creating first and second reflected light beams 12a, 12b. The reflected light beams 12a produce a primary image 8, while the reflected light beams 12b produce a secondary image 9. The simultaneous appearance of two 8, 9 images makes the result unenjoyable and even confusing. Fig. 2 shows the appearance of the two images 8, 9, and Fig. 3 shows the intensities of the reflected light beams 12a, 12b for unpolarized light. Due to multiple reflections, even more scattered light than shown in the drawing may appear, as is known to those skilled in the art. There are several known solutions for eliminating one of the two resulting images 8, 9 and for reducing the intensity of one of the light beams 12a, 12b relative to the other (i.e. to improve the contrast ratio).

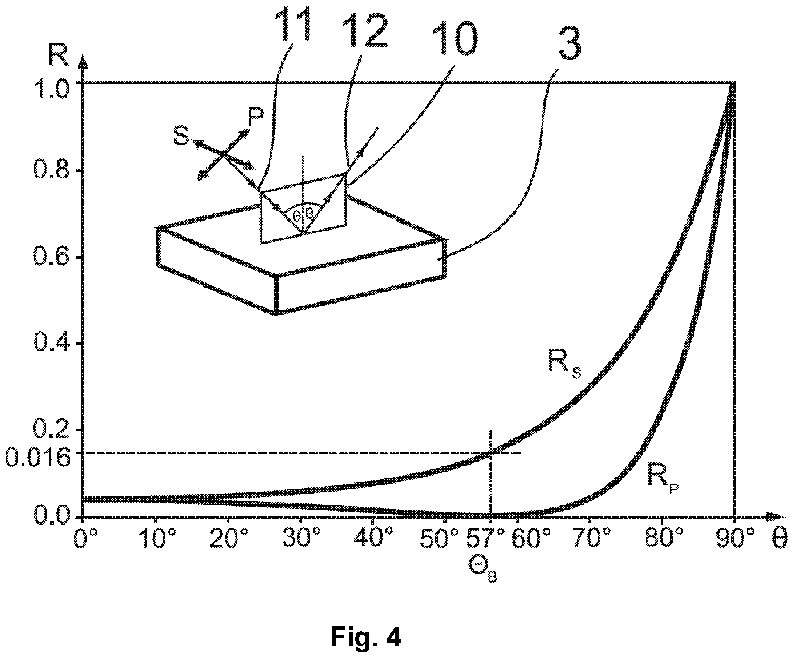

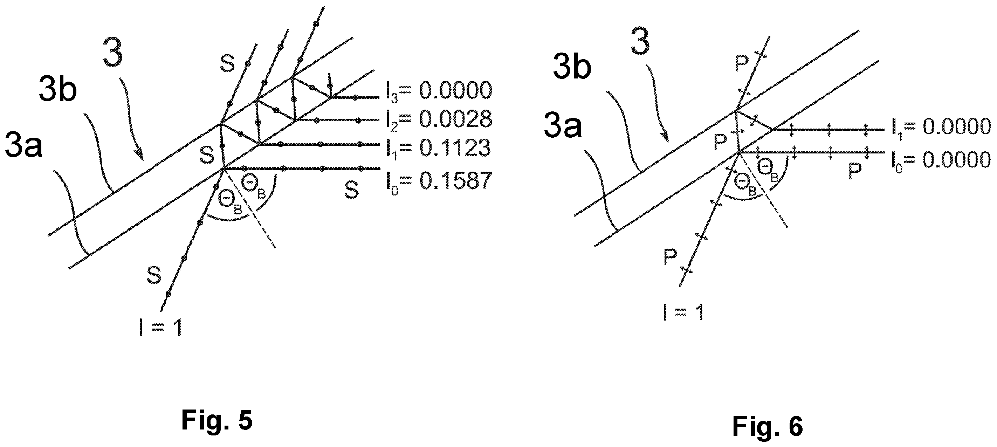

The intensities reflected on each surface are determined by the so-called Fresnel formulas. At a reflective surface, the incident light beam 11 and the reflected light beam 12 define a plane, the so-called plane of incidence 10. The ratio of the intensity of the reflected light beam 12 and the incident light beam 11, i.e. the reflection coefficient $R = I_R/I_B$ ($I_B$ - intensity of the incident beam, $I_R$ intensity of the reflected beam) depends on the angle of incidence $\Theta$, the refractive indices of the materials on both sides of the surface (for air n = 1, for a given glass n = 1.518), and the relationship between the plane of incidence 10 and the polarization of the light beam, as is known to the person skilled in the art. These relationships are shown in Fig. 4. Linearly polarized light is S-polarized when polarized perpendicular to the plane of incidence 10 and P-polarized when parallel to the plane of incidence 10. The so-called $\Theta_B$ Brewster angle is also known, which is an angle of incidence characteristic of the material boundary at which the reflection coefficient of the P-polarization $R_P$ decreases to zero, while the reflection coefficient $R_S$ of the S-polarization is not zero. (For all other, not purely S- or P-polarizations, the reflection coefficient is composed of Rs and $R_P$). HUDs operating on the polarization principle try to take advantage of this effect and are designed at a Brewster angle. However, Figures 5 and 6 show that illuminating the windscreen only at Brewster angle with S- and P-polarization still does not provide a system suitable as a head-up display, since in the case of S-polarization the projected image remains having ghost image (Fig. 5) or in the absence of reflections in the case of P-polarization no reflected light enters the observer's eye (Fig. 6), so the projected image will not be visible.

To solve the problem shown in Figs. 5 and 6 known HUD systems use a solution where the reflection properties on the at least one surface 3a, 3b of the reflecting element 3 are changed as a function of the polarization. In one known solution, a special thin film system is formed on one or even more surfaces 3a, 3b of the reflecting element 3. The function of the created high-reflection reflective layer 13 providing high reflection - or the low-reflection anti-reflective layer 14 providing low reflection - is to increase, or decrease, the reflection of light on the given surface 3a, 3b for a given type of polarization (see Figs. 7, 8). In the Brewster angle and in the region close to it, with the reflecting element 3 illuminated with light of the given type of polarization, it is possible to achieve a high contrast ratio of the reflections and thus to enjoy the reflected image, but the useful range is limited. In one possible embodiment, the windscreen is coated with, for example, 12 nm of Ag and 63 nm of SiO2 and is illuminated with S-polarized light beams 11.

The required thin film system is usually created on foil (e.g. 3M® WCF = Windshield Combiner Film) and laminated to the appropriate surface during manufacture. Cheaper solutions include a reflective film that can be applied to the windscreen even after manufacture by the user. An important aspect that cannot be overlooked when designing the reflection layers 13 is the transmission of the windshield, which is restricted by country (min. 75% in Europe, min. 70% in the USA). If a windscreen with a thin-film system reflects too much light and thus transmits little, the transmission may fall below the statutory value and thus not be marketable.

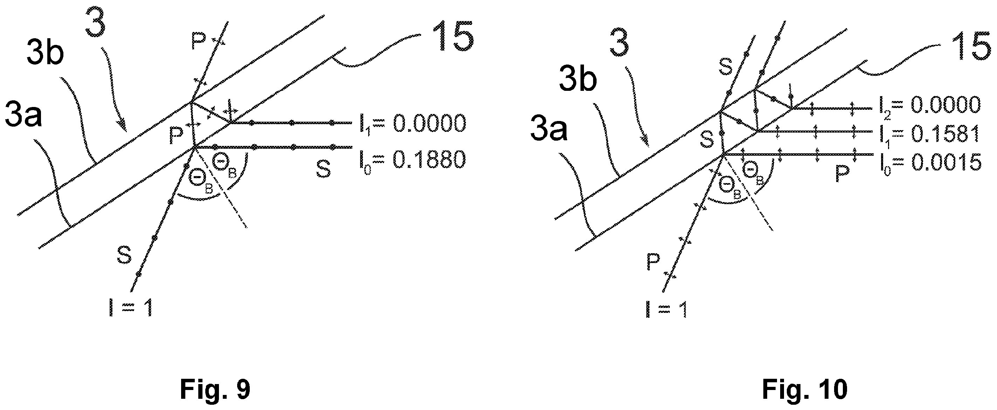

**In** another known solution (Figures 9 and 10), the polarization-dependent reflection is created by rotating the plane of polarization of the light beam passing through the first reflective surface 3a. For example, an optical birefringent layer 15 ($\lambda/2$ waveplate) with an optical axis 150, preferably in the form of a film, is laminated to the first reflective surface 3a of the reflecting element 3 and the reflecting element 3 is illuminated with polarized light at an angle close to Brewster angle. A birefringent layer 15 of appropriate thickness (with an optical axis at an angle of 45° to the plane of incidence coinciding with the plane of the drawing) rotates the plane of polarization of the illuminating light by 90°, i.e. makes P-polarization from S-polarization and vice versa. Thereby, the incident light beam 11 coming at an angle close to the Brewster angle will, depending on its polarization, be reflected from one surface 3a, 3b with a lower intensity than from the other. Using S-polarization (Fig. 9), the reflection from the first reflective surface 3a is larger, while using P-polarization (Fig. 10), the reflection from the second reflective surface 3b is larger. Gradually deviating from the Brewster angle, this effect also deteriorates more and more, and a ghost image appears, so the useful angle range is limited.

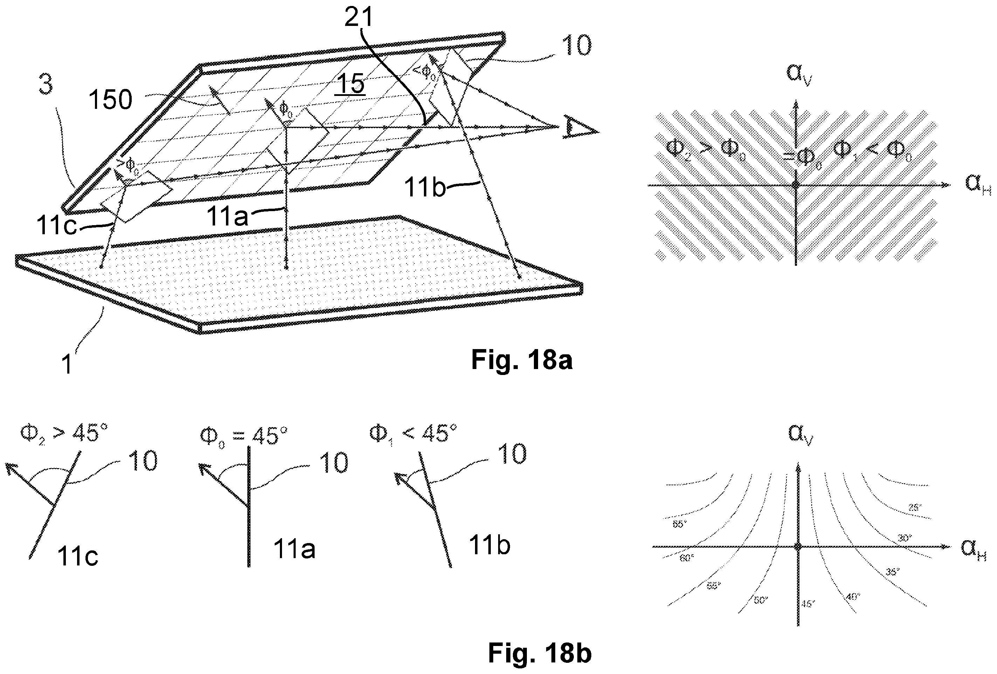

A further problem with the solutions comprising the birefringent layer 15 is that, when deviating from a design direction, the angle between the plane of incidence 10 and the optical axis 150 of the birefringent layer 15 differs from direction to direction (Figures 18a and 18b). As a result, the exact 90-degree polarization rotation for which the birefringent layer is designed is not met in each direction. Fig. 18a shows three light beams 11a, 11b and 11c which reach the user's eyes from different points in the perceived image. Of the three beams indicated, the first light beam 11a travels in a design direction 21, and for this beam the angle between the optical axis 150 and the plane of incidence 10 corresponds to an angle $\Phi_0 = 45$ degrees which is optimal for the **HUD** system. This angle does not change along the vertical direction for the light beams 11 which are incident on the reflective element 3 closer to one of the horizontal edges of the image observed by the user. On the other hand, when the incident light beams 11 which are deviating from the vertical centreline of the image in a horizontal direction are observed, it is found that in the case of the beams 11 which are deviating from the vertical centreline of the image to the right, such as the beam 11b, the angle formed by the plane of incidence 10b and the optical axis 150 decreases, thus, the angle $\Phi_1$ associated with the light beam 11b is smaller than the angle $\Phi_0$, i.e., $\Phi_1 < 45$ degrees. Similarly, for angles to the left of the vertical centreline of the image, such as light beam 11c, this angle increases, so the angle $\Phi_2$ between the plane of incidence 10c and the optical axis 150 is larger than the angle $\Phi_0$, i.e. $\Phi_2 > 45$ degrees. The birefringent film rotates the polarization by 90-degrees only if the condition of $\Phi_0 = 45$ degrees is satisfied, however, at different angles the rotation of polarization will no longer be exactly 90 degrees and the intensity ratios of the light beams 12a, 12b reflected from the surfaces 3a, 3b differ from the ideal, hence the ghost image ratio increases. In Fig. 18b, curved lines on the right indicate the same angular values in the projected image area. In the vertical centreline of the image, this angle is equally 45 degrees between the lower and upper edges of the image. For light beams 11 which are deviating from the vertical centreline of the image to the right, different curves denote the light beams 11 for which the optical axis is at an angle of less than 45 degrees to the plane of incidence 10; wherein the optical axis 150 of the birefringent layer 15 forms an angle with the plane of incidence 10 of 40 degrees along the first curve, 35 degrees along the second curve, 30 degrees along the third curve and 25 degrees along the fourth curve. For light beams 11 which are deviating from the vertical centreline of the image to the left, different curves denote the light beams 11 for which the optical axis is at an angle of more than 45 degrees to the plane of incidence 10; wherein the optical axis 150 of the birefringent layer 15 forms an angle with the plane of incidence 10 of 50 degrees along the first curve, 55 degrees along the second curve, 60 degrees along the third curve and 65 degrees along the fourth curve. For each light beam 11, the deviation of the angle of the optical axis 150 from the ideal angle of 45 degrees leads to a deterioration in the image quality proportional to the deviation, i.e., the ghost image ratio increases.

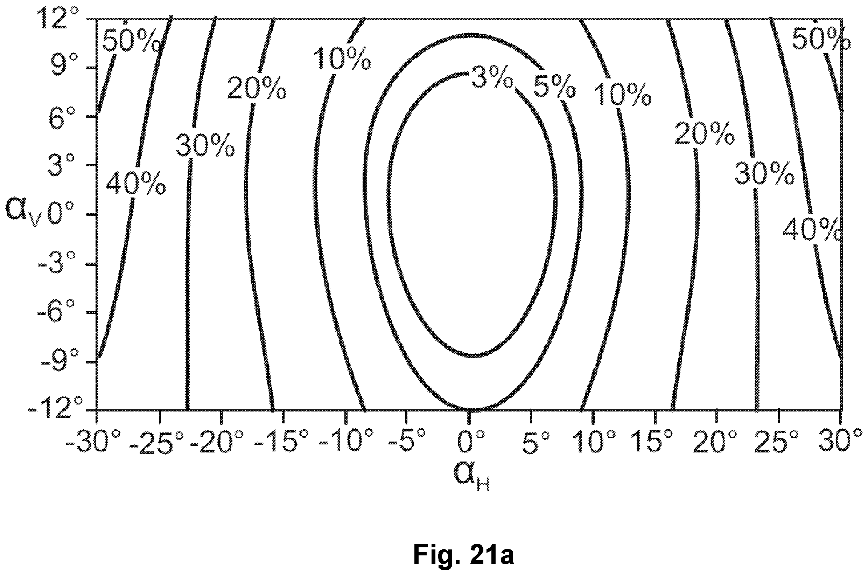

Fig. 21a shows the ghost image ratio during the deviation in vertical and horizontal angles to a system according to Fig. 9, illuminated by S-polarization. Depending on the individual, ghost image above 3-5% can be inconvenient. In the drawing, areas with the same ghost image ratio are delimited by a solid line, and the value of the ghost image ratio is indicated on each delimiting line. The figure shows the lines belonging to the areas with 3%, 5%, 10%, 20%, 30% 40% or 50% ghost image ratio, where within each line the given value is smaller or decreases as it moves inwards, and outside the lines this value is larger or increases as it moves outwards. It can be clearly seen in the figure that the 3% ghost image ratio is provided only in a small area, namely in the vertical direction approx. in the range of + 9° and -9°, and in the horizontal direction approx. in the range of -7° to + 7°. The angles shown in the figure are the angles enclosed by the beams entering the observer's eyes and defining the field of view which can be considered to be substantially "ghost image free".

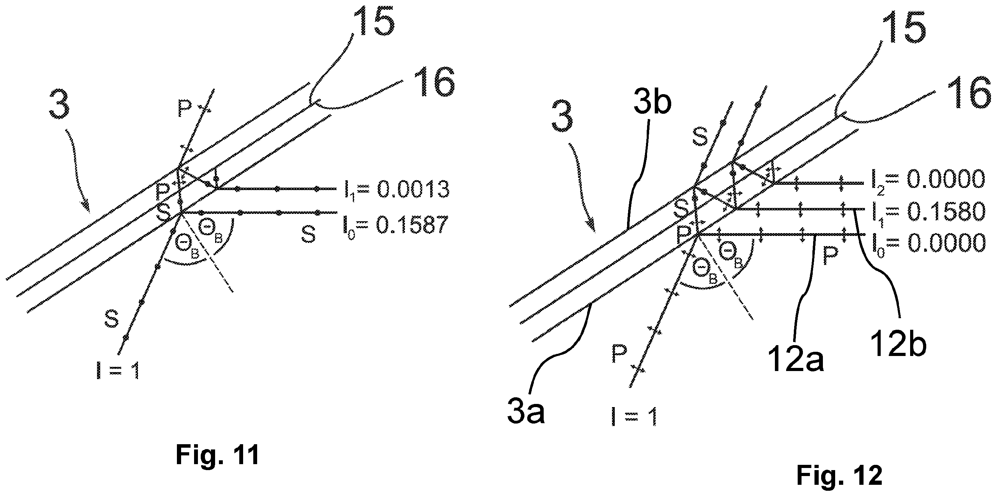

The currently widely used windshields consist of two layers of glass and a layer of polyvinyl butyral (PVB) enclosed between them. (The latter performs a safety function. Its purpose is to prevent glass shards from falling on the occupants in the event of an accident.) The birefringent layer 15 is also typically enclosed between the two layers of glass to protect it (Figure 11, Figure 12). This does not significantly degrade the contrast, but makes the birefringent layer 15 more protected from mechanical influences. Such a solution is known, for example, from patent documents US10416447B2 and EP0424950A2.

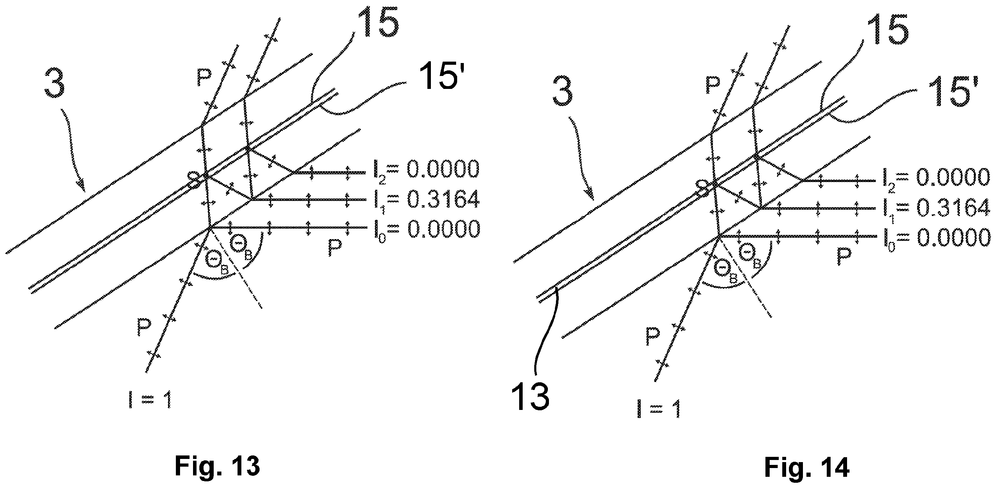

In another known solution, two $\lambda/2$ waveplates are arranged between the glass layers of the windscreen, and between the films an air layer (Fig. 13) (US7839574B2) or a reflective thin film system (US7123418B2, US6952312B2) is provided. Fig. 13 shows a flat windshield with two $\lambda/2$ birefringent layers 15, 15' enclosed in the PVB layer 16, including an air layer, where the windshield is illuminated with P-polarized light. The optical axis of one film is at an angle of 45° and the other at an angle of 135° to the plane of incidence. Figure 14 shows a flat windscreen with two $\lambda/2$ birefringent layers 15, 15' enclosed in the PVB layer 16, including a reflection layer 13, wherein the windscreen is illuminated with P-polarized light. The optical axis 150 of one of the birefringent layers 15 forms an angle of 45°, while the optical axis 150 of the other forms an angle of 135° with the plane of incidence. The advantage of these two solutions is that they operate in P-polarization, i.e. polarizing sunglasses do not block the visibility of the image. Systems based on the P-polarization principle described earlier have not become widespread because in rainy weather - and because of all kinds of external dirt at all - light is scattered on the outer surface and the image deteriorates. In contrast, in the above mentioned two arrangements, the highest intensity of reflection takes place in the PVB 16 layer, so rainy weather is not a hindrance. The mechanical protection of the film or films placed between the layers of glass is provided by the outer layers of glass.

U.S. Pat. No. 5,999,314 discloses a solution in which a reflective or anti-reflective 13, 14 layers are applied to the outer surface of the glass sheets surrounding the birefringent layer 15 in order to further improve the contrast ratio. The thin film applied to the outer surface also provides the ability to modify or adjust the Brewster angle.

The disadvantage of the polarization methods used in the known solutions presented above is that deviation from the ideal angle is only allowed in a small angular range and in case of a larger deviation from it (moving towards the edges of the image) the image deteriorates quickly, i.e. becomes having ghost image. Proper operation is typically achieved within a range of $\pm$ 3-9°, i.e. on just a palm of the surface of the windshield (the exact value depends on the method and the definition of "proper operation" as already described in connection with Figure 21a).

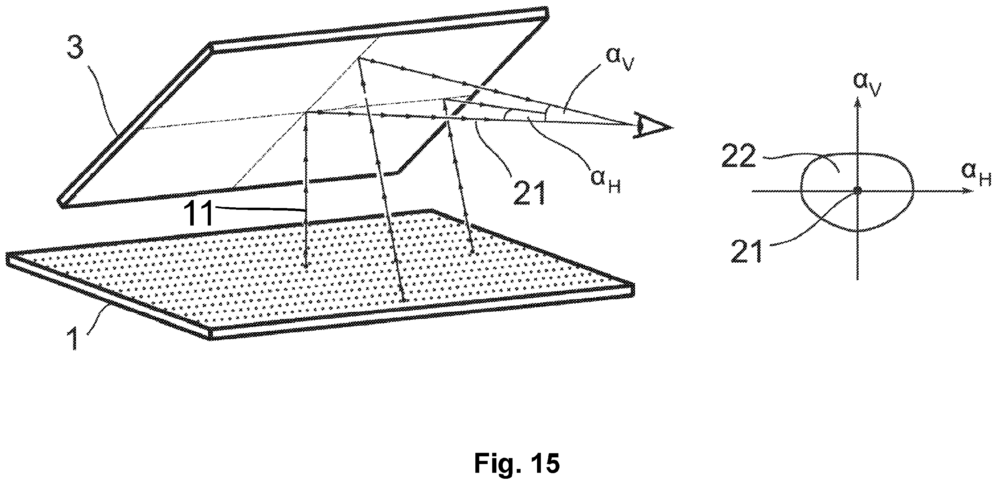

From the HUD systems comprising an image display device 1 and a reflecting element 3, which are described above and schematically shown in Fig. 15, it can be generally said that in only one direction, the so-called 21 design directions where they work flawlessly i.e. ghost image free. Conventional HUD systems are designed so that the displayed image is ghost free viewed from the design direction, i.e. the design direction 21 is what the HUD system is optimized for. Deviating from this direction vertically and horizontally, an increasingly stronger ghost image appears. The useful area 22 shown in Fig.15 is the spatial angle range where the ghost image is not yet disturbing. Depending on the individual, the ghost image ratio becomes inconvenient above 3-5% approx.

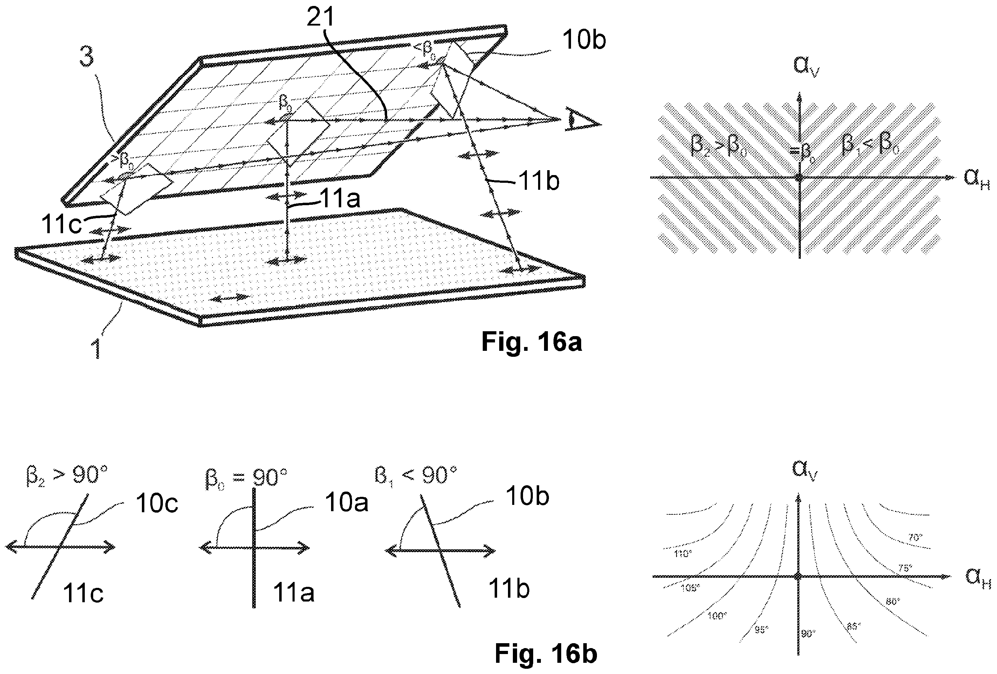

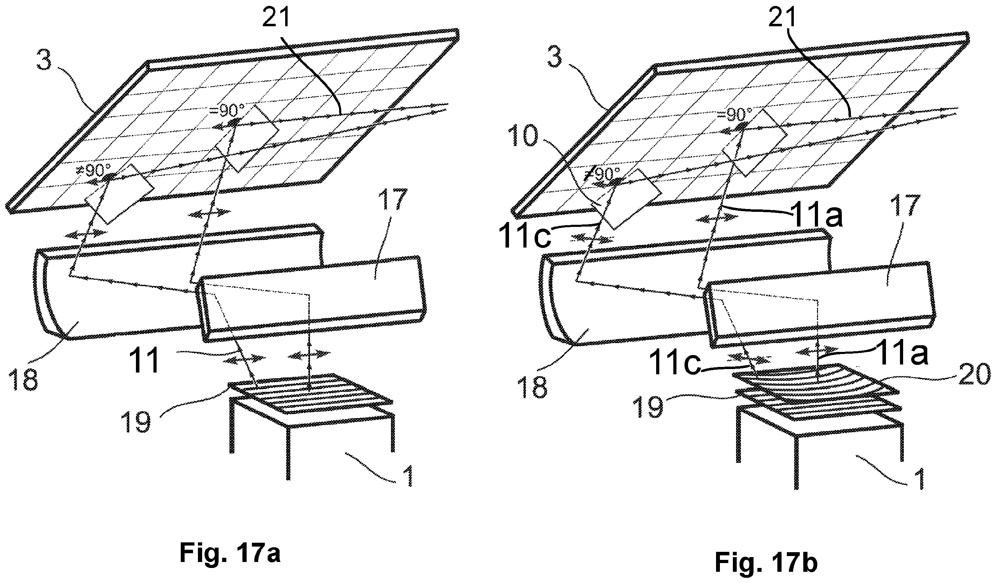

In the solutions shown in Fig. 17a, the light exiting the image display device 1 is passed through a simple linear polarizer 19, which thus has a homogeneous polarization. The polarized light beams are reflected from the first mirror 17 and the second mirror 18 to the reflecting element 3 and then reflected from there to the user's eyes. The second mirror 18 is preferably an aspherical surface mirror that produces converging beams from the projected diverging beams. Since in the known solutions the optical axis of the linear polarizer 19 is the same at all points, the polarization axes of the passing linearly polarized light beams will also point in the same direction. Therefore, moving towards the edges of the image perceived by the user, i.e. deviating from the design direction 21, the polarization planes of the incident light beams 11 are also increasingly rotated relative to the planes of incidence 10 (see Figures 16a and 16b). Fig. 16a shows three incident light beams 11a, 11b, 11c which have the same polarization and reach the user's eyes from different points of the image generated by the image display device 1. Of the three beams shown, the light beam 11a travels in the ideal direction, i.e. in the design direction 21, and the direction of polarization of this beam corresponds to the ideal polarization direction for the HUD system, i.e. the polarization axis of the light beam 11a forms an angle $\beta_0 = 90$ degrees with the plane of incidence 10a of the light beam 11a. This angle does not change along the vertical direction for the light beams 11 which are incident on the reflective element 3 closer to one of the horizontal edges of the image observed by the user. On the other hand, when light beams 11 deviating from the vertical centreline of the image in a horizontal direction are observed, it is found that in the case of beams 11 which are deviating from the vertical centreline of the image to the right in the horizontal direction, such as in the case of the light beam 11b, this angle decreases, so the angle $\beta_1$ for the light beam 11b is smaller than the angle $\beta_0$, i.e. $\beta_1 < 90$ degrees. Similarly, for angles to the left of the vertical centreline of the image, such as the light beam 11c, this angle increases, so that the angle $\beta_2$ for the light beam 11 is larger than the angle $\beta_0$, i.e. $\beta_2 > 90$ degrees. Since in a given plane of incidence 10 the incident light beams 11 can be considered to be purely S-polarized only at $\beta_0 = 90$ degrees, we can no longer speak of purely S-polarized beams at different angles. In Fig. 16b, curved lines on the right indicate the same angular values $\beta$ in the projected image area. In the vertical centreline of the image, this angle between the lower and upper edges of the image is equal to 90 degrees. For light beams 11 deviating horizontally to the right of the vertical centreline of the image, the angles of view at which the polarization axis makes an angle of less than 90 degrees with the plane of incidence 10 are shown along different curves. The polarization axes of the light beams 11 form an angle of 85 degrees along the first curve, 80 degrees along the second curve, 75 degrees along the third curve and 70 degrees along the fourth curve with the plane of incidence 10 belonging to the given light beam 11. Similarly, in the case of light beams 11 deviating horizontally to the left of the vertical centreline of the image, the light beams 11 for which the polarization axis forms an angle of more than 90 degrees with the plane of incidence 10 are shown along different curves. The polarization axes of the light beams 11 form an angle of 95 degrees along the first curve, 100 degrees along the second curve, 105 degrees along the third curve and 110 degrees along the fourth curve with the plane of incidence 10. For each polarized light beam 11, the deviation of the angle of the polarization axis from the ideal 90 degree angle leads to a deterioration in the image quality proportional to the deviation, i.e., the ghost image ratio increases.

The inventors have found that in the case of prior art HUD systems, the reflecting element 3 is illuminated with homogeneous light, i.e. with light polarized in the same way for each light beam 11, therefore, the polarization will be appropriate only for the light beams reflected in the design direction 21. That is, moving towards the edges of the image - due to the rotation of the planes of incidence 10 - the polarization of the light beams 11 arriving there will be suboptimal compared to the design direction and ghost images will appear. In other words, with current HUD systems, only the centre of the image will be ghost image free, so the area where an image of acceptable quality can be displayed is limited.

The inventors have found that in the existing HUD systems the polarization axes of the incident light beams 11 belonging to the reflected light beams 12 coming from the edges of the observed image and the planes of incidence 10 are at an angle to each other which does not correspond to the design angle.

The invention is further based on the recognition that the polarization states of the light beams 11 can be set in accordance with predetermined optimal polarization states corresponding to the propagation directions of the light beams 11 by means of an appropriately designed polarizing element arranged in the path of the incident light beams. With said optimal polarization states, a substantially ghost free image can be achieved even at the edges of the image.

It is an object of the present invention to provide a method and apparatus which are free from the disadvantages of the prior art solutions. It is an object of the present invention to improve the image quality of current HUD systems, in particular to reduce ghost image ratio and increase the area that can be considered substantially ghost image free.

The objective of the invention is therefore to transform the HUD system in such a way that it does not simply emit homogeneously polarized light onto the reflecting element 3, but rather polarized light with the polarization required to achieve the minimum ghost image ratio arrives at each point of the reflecting element 3. Light having linear or elliptical (including circular) polarization may be suitable for this, depending on how the HUD works.

According to the invention, the object is achieved by a HUD system which comprises an image display device and a reflecting element having a partially transmissive first reflective surface and at least one partially transmissive second reflective surface substantially parallel thereto, and a layer selected from a group consisting of polarization-dependent reflection layer anti-reflection layer and optical birefringent layer, wherein the second reflective surface is on the side of the first reflective surface opposite the image display device and wherein the reflecting element is adapted to produce reflected light beams from incident light beams originating from points of an image generated by the image display device and being incident on the reflective surfaces and to reflect at least a portion of the reflected light beams toward a design detection point, and which reflecting element is arranged relative to the image display device such that a portion of the incident light beams reflected in the direction of the design detection point reaches the first reflective surface at a Brewster angle. In the light path between the image display device and the reflecting element, it comprises a polarizing element for setting the polarization states of the incident light beams reflected by the reflecting element towards the design detection point, so that the intensity ratio, which is calculated by dividing a minimum of an intensity of the reflected light beam first reflected by the first reflective surface and an intensity of the reflected light beam first reflected by the second reflective surface by a maximum of the two said intensities, has a minimum.

An image display device (also known as a projection unit) typically produces an image with a width defined in a first direction and a height defined in a second direction substantially perpendicular to the first direction. The light beams emanating from here may pass through additional deflecting optical elements before reaching the light-transmitting and reflective reflecting element (i.e. the windscreen), from where the reflected or transmitted light enters the user's eyes. In a preferred embodiment, the image display device projects substantially linearly polarized light onto the reflecting element, for example, the image display device may comprise a linear polarizer. The reflecting element, like all windscreens, reflects light with a given polarization characteristic to a large extent and transmits light with a different polarization characteristic to a large extent. The optical element arranged in the path of the projected linearly polarized light beam sets the polarization states of the incident light beams reflected in the direction of the design detection point (i.e., the light beams defining the projected image) as described above, which can be understood as modifying the polarization properties of these light beams as a function of the vertical and/or horizontal angle ($\alpha_V$, $\alpha_H$) enclosed with the design direction pointing to the detection point.

Further object of the invention is a method according to claim 1 for improving the image quality of a HUD system.

According to the invention the polarization properties of the light beams 11 incident on the reflecting element 3 are set differently for each direction of incidence by means of a suitably designed polarizing element, so that the ghost image after reflection from the reflecting element 3 is minimal. With such a solution, the contrast ratio of the ghost image can be significantly reduced for each pixel, i.e. the image area perceived as ghost image free by the user can be significantly increased.

Preferred embodiments of the invention are defined in the dependent claims.

Further details of the invention will be described with reference to the accompanying drawings. In the drawings

Figure 1 is a schematic diagram of a prior art HUD system,

Figure 2 is a schematic drawing showing a ghost image of a prior art HUD systems,

Figure 3 is a diagram showing the intensities of the reflections according to Fig. 2,

Figure 4. shows the curves of the reflection coefficients of purely P- and purely S-polarized beams as a function of the angle of incidence at an air-glass medium border,

Figure 5 is a diagram illustrating the results of the use of pure S-polarized light and a simple windscreen,

Figure 6 is a diagram illustrating the result of using pure P-polarized light and simple windscreen,

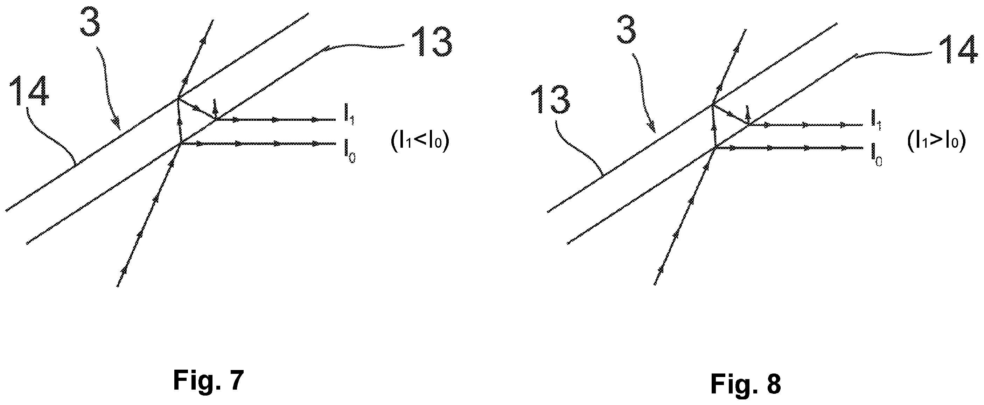

Figure 7 is a diagram illustrating the result of applying a reflective element with a high-reflection reflective layer on the first reflective surface of the reflecting element and a low-reflection anti-reflective layer on the second reflective surface,

Figure 8 is a diagram illustrating the result of applying a reflective element with a high-reflection reflective layer on the second reflective surface of the reflecting element and a low-reflection anti-reflective layer on the first reflective surface,

Fig. 9 is a diagram illustrating the result of the use of an optical birefringent layer and S-polarized light on the first reflective surface of the reflecting element,

Figure 10 is a diagram illustrating the result of the use of a birefringent layer and P-polarized light on the first reflective surface of the reflecting element,

Figure 11 is a diagram illustrating the results of the use of **PVB** film and birefringent interlayer and S-polarized light wherein the reflecting element is formed as a double-layer windscreen,

Figure 12 is a diagram illustrating the results of the use of PVB film and birefringent interlayer and P-polarized light wherein the reflecting element is formed as a double-layer windscreen,

Figure 13 is a diagram illustrating the result of the use of two birefringent layers between the layers and an air layer between them wherein the reflecting element is formed as a two-layer windscreen,

Fig. 14 is a diagram illustrating the result of the use of two birefringent layers between the layers and a reflection layer between them wherein the reflecting element is formed as a two-layer windscreen,

Figure 15 is a schematic diagram illustrating the ghost image free area in conventional HUD systems,

Figure 16a is a diagram illustrating the change in angles between the planes of incidence and the polarization axes of the incident light beams as a function of the direction of the reflected light beams in conventional HUD systems,

Figure 16b is a diagram illustrating the inclination of the polarization axes of the incident light beams highlighted in Figure 16a with respect to the planes of incidence,

Figure 17a is a diagram illustrating the change in angles between the planes of incidence and the polarization axes of the incident light beam as a function of the direction of the reflected light beams in conventional HUD systems,

Figure 17b is a diagram illustrating how the angles between the planes of incidence and the polarization axes of the incident light beams remain constant in a **HUD** system according to the invention as a function of the direction of the reflected light beams,

Figure 18a is a diagram illustrating the change in angles between the planes of incidence and the optical axis of the birefringent layer on the reflecting element as a function of the direction of the reflected light beams in conventional **HUD** systems,

Figure 18b is a drawing illustrating the inclination of the planes of incidence of the beams highlighted in Figure 18a relative to the optical axis of the birefringent layer on the reflecting element,

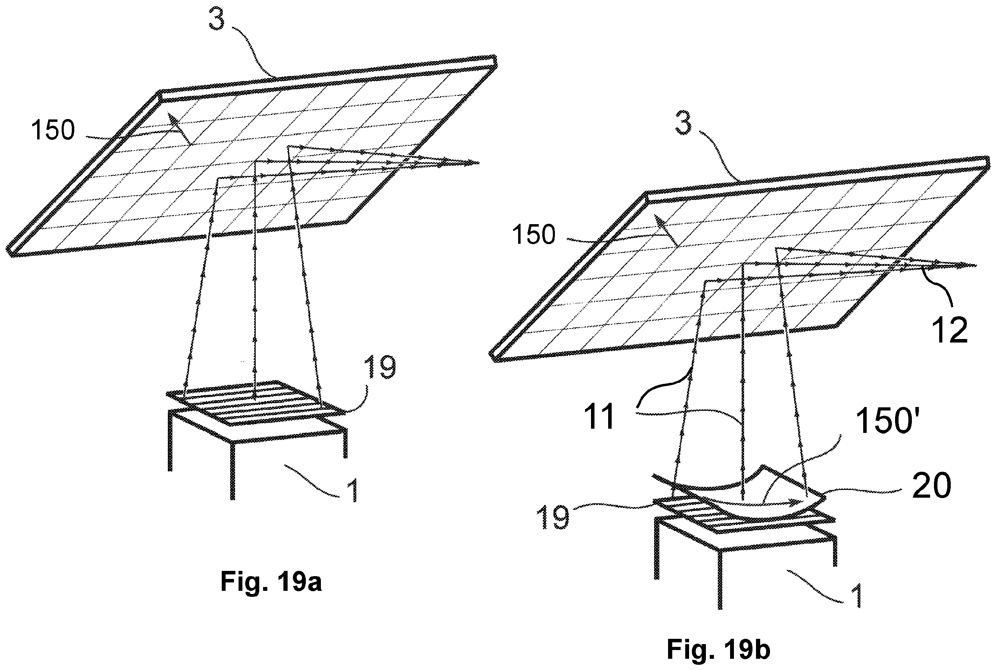

Figure 19a is a diagram illustrating a conventional HUD system having only a linear polarizer arranged after the image display device, showing the optical axis of the birefringent layer on the reflecting element,

Figure 19b is a diagram illustrating a HUD system according to the invention, in which the linear polarizer arranged after the image display device is followed by a polarizing element according to the invention, indicating the optical axes of the birefringent layers arranged on the reflecting element and on the polarizing element, respectively,

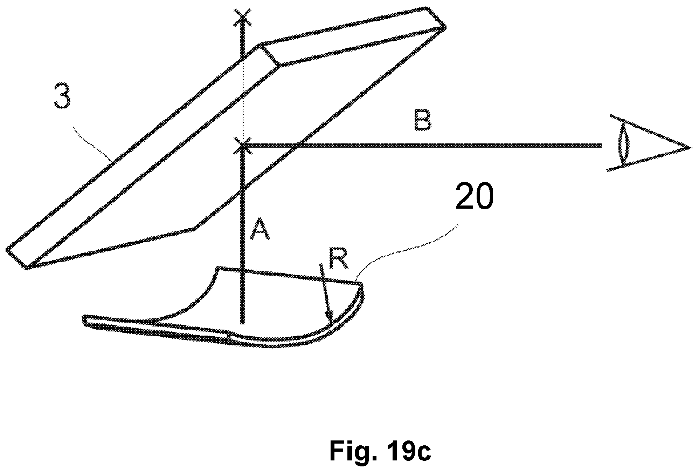

Figure 19c is a schematic view illustrating a curved polarizing element according to the invention,

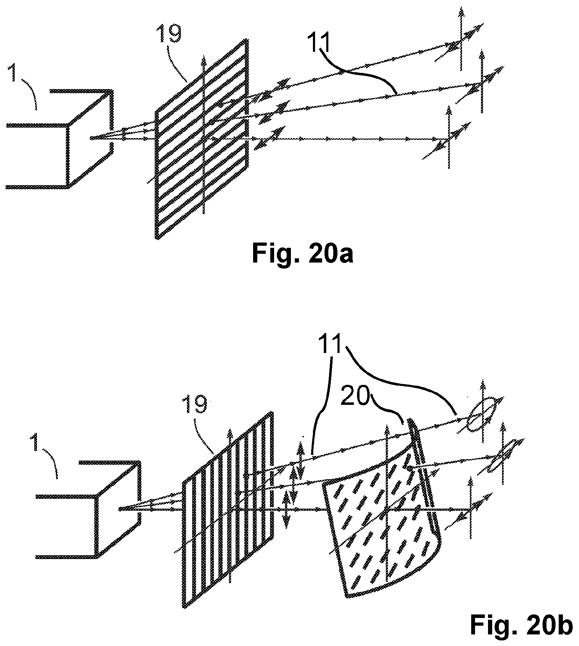

Figure 20a is a schematic drawing of light beams produced by an image display device and polarizer of a conventional HUD system,

Figure 20b is a schematic diagram of beams produced by an image display device and a first exemplary polarizing element of a HUD system according to the present invention,

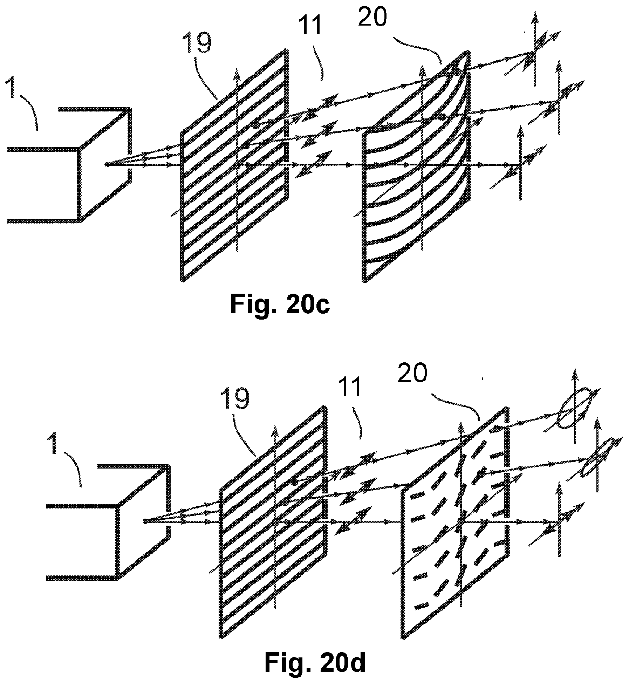

Figure 20c is a schematic diagram of beams produced by an image display device and a second exemplary polarizing element of a HUD system according to the present invention,

Figure 20d is a schematic diagram of beams produced by an image display device and a third exemplary polarizing element of a HUD system according to the present invention,

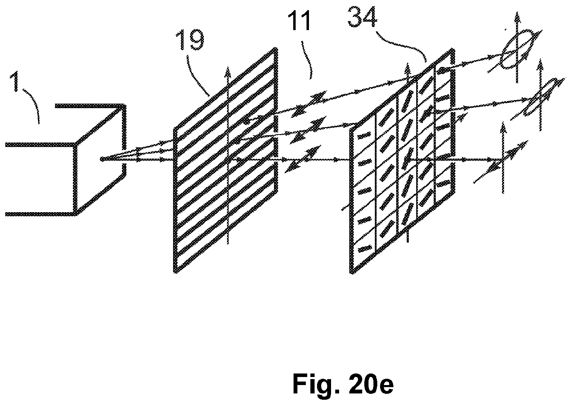

Figure 20e is a schematic diagram of beams produced by an image display device and a fourth exemplary polarizing element of a HUD system according to the present invention,

Figure 21a is a diagram of the ghost image ratio values in the projected image in the case of the HUD system shown in Figure 20a,

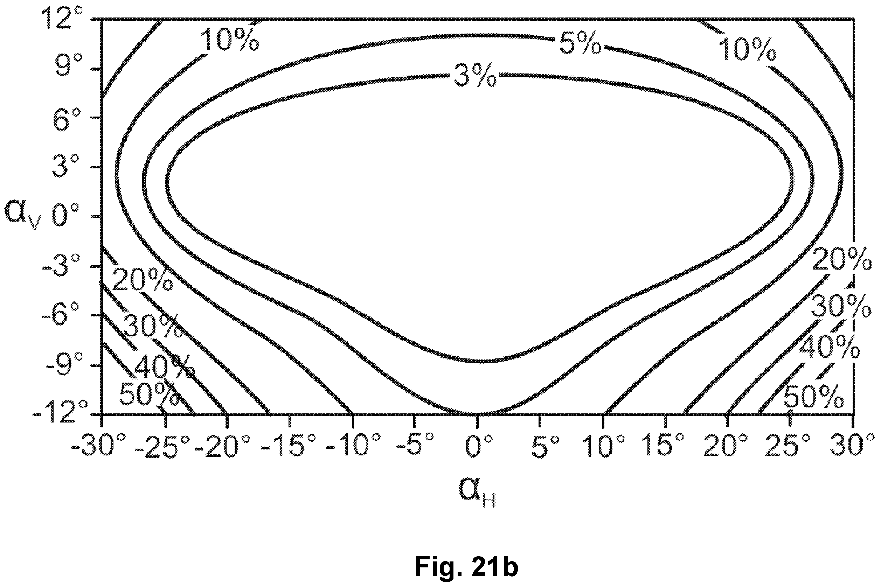

Figure 21b is a diagram of the ghost image ratio values in the projected image in the case of the HUD system shown in Figure 20b,

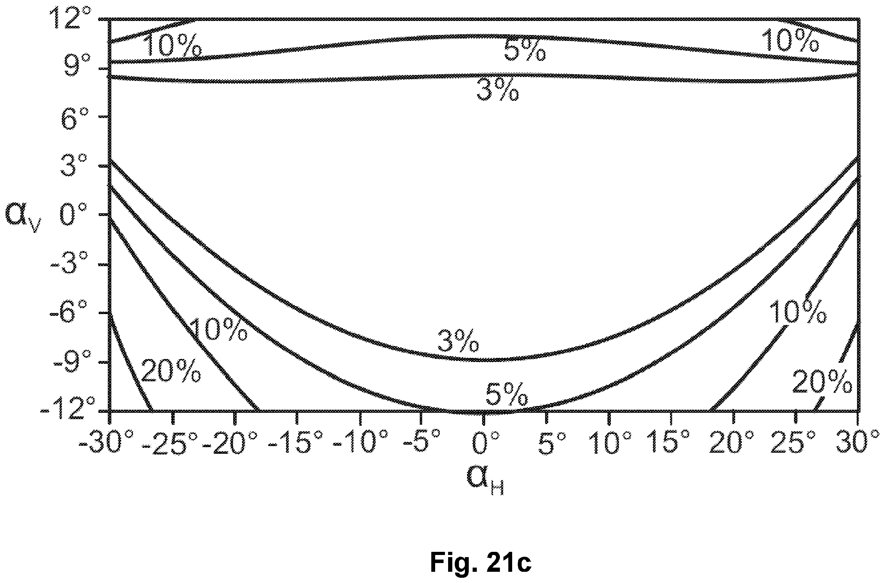

Figure 21c is a diagram of the ghost image ratio values in the projected image in the case of the HUD system shown in Figures 20c, 20d and 20e,

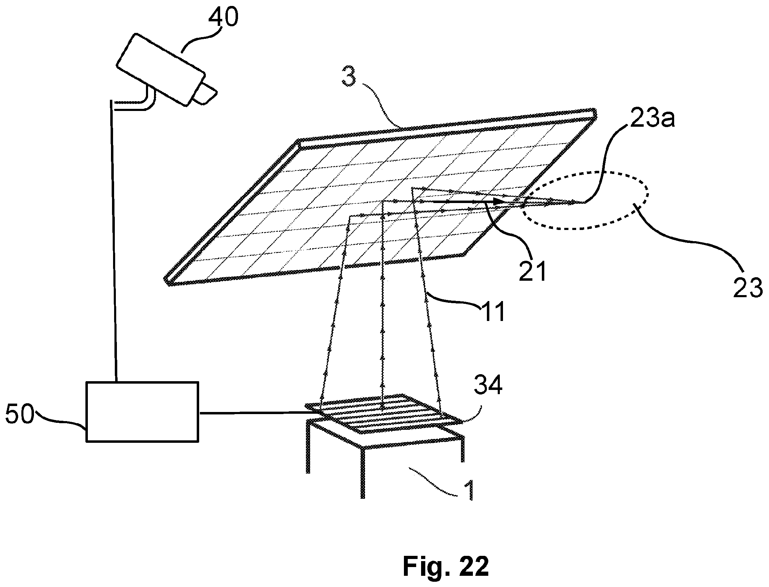

Figure 22 is a schematic view of a preferred exemplary embodiment of a HUD system according to the invention.

Figures 1 to 17a and 21a show prior art HUD systems and their problems, which are described in detail in the previous sections of the specification. For the sake of clarity and simplicity of the description, the figures already described will be referred to only to the extent necessary.

The method according to the invention is aimed at improving the image quality of a HUD system comprising an image display device 1 and a reflecting element 3 having a partially transmissive first reflective surface 3a and at least one partially transmissive second reflective surface 3b substantially parallel thereto, and a polarization-dependent reflection layer 13 and/or an anti-reflection layer 14 and/or an optical birefringent layer 15, as shown, for example, in Fig. 17b. The second reflective surface 3b is located on the side of the first reflective surface 3a opposite to the image display device 1, i.e. the light beams produced by the image display device 1 first arrive at the surface 3a and passing through it reach the second surface 3b. In the context of the present invention, polarization-dependent reflection layer 13 and anti-reflection layer 14, respectively, mean layers (e.g. film, coating, etc.) whose reflection is maximal or minimal for a given polarization (e.g. for S-polarization) of light. That is, these layers reflect (reflection layers 13) or transmit (anti-reflection layers 14) the given type of polarized light with high efficiency. The reflection layer 13 and the anti-reflection layer 14 can also be arranged on or between the surfaces 3a, 3b, as described previously.

In a preferred embodiment, the reflecting element 3 is provided as a windscreen of a vehicle, the inner surface of which is the first surface 3a and the outer surface of which is the second surface 3b. The reflective surfaces 3a, 3b are adapted to produce reflected beams 12 from incident light beams 11 originating from different points of the image generated by the image display device 1 and arriving at the reflective surfaces 3a, 3b and to reflect a portion of the reflected light beams 12a, 12b towards a design detection point 23a located within a design detection region 23. It is noted that the image generated by the image display device is the image perceivable on a screen or other surface of the image display device. The image observed by the user of the HUD system is referred to as the projected image. The reflecting element 3 is preferably arranged so that at least a portion of the incident light beams 11 arrives at the surfaces 3a, 3b at a Brewster angle. Note that the design detection region 23 in the context of the present description denotes a region comprising spatial positions from which the user is expected to view the image generated by the HUD system, so this is a design parameter. Accordingly, the design detection region 23 depends on the environment of the HUD system, for example in case of a HUD system designed for installation in a given type of vehicle it depends on the location of the driver's seat with respect to the windscreen. Practically, for example the positions of the eyes of users (drivers) of different height may be determined when seated in the driver's seat of the given type of vehicle in a driving position (i.e. the seat is set at a right height and distance for comfortable driving). A region encompassing the determined eye locations may be considered as the design detection region 23 and e.g. a centre point of the design detection region 23 may be considered as the design detection point 23a. It is further conceivable to determine only the design detection point 23a, for example the design detection point 23a may correspond to a point located half way between the two eyes of a user having an average height who is seated in the driver's seat in a driving position. A further possibility is to determine the design detection point 23a for a given user. By default, when the HUD system is used as intended, the earlier described design direction 21 points to the design detection point 23a. It is further noted that the reflecting element 3 reflects only a portion of the light beams originating from the points of the image generated by the image display device 1 in the direction of the design detection point 23a; the other beams of light are reflected in other directions. However, since only these light beams reach the hypothetical user viewing from the design detection point 23s (whereby these light beams form the projected image), consequently, the method according to the invention only deals with the incident light beams 11 which create these light beams, and in the further steps of the method these are referred to as incident light beams 11 reflected in the direction of the design detection point 23a.

According to the present invention, optimal polarization states are determined for the incident light beams 11 reflected by the reflective surfaces 3a, 3b in the direction of the design detection point 23a for which optimal polarization states the intensity ratio of the reflected light beams 12a, 12b first reflected by the first reflective surface 3a and first reflected by the second reflective surface 3b during the reflection of the given incident light beam 11 is minimal. Note that in the case shown in Fig. 12, for the light beams 12a and 12b reflected by the surfaces 3a, 3b, this intensity ratio is zero (since the P-polarized light beam 11 incident at a Brewster angle passes completely through the surface 3a, so there is no reflection), i.e. the minimum intensity ratio of the reflected light beams 12a, 12b is also zero. From the point of view of the HUD system, this is the ideal case, because then no ghost image appears at all. As used herein, the reflected light beams 12b first reflected by the second reflective surface 3b are understood to mean the light beam passing through the first surface 3a and first reflected by the second surface 3b. The higher order light beams shown in Fig. 5 reflected between the first and second surfaces 3a, 3b and reflected by the second surface 3b towards the design detection point 23a are not taken into account for the sake of simplicity. The optimal polarization state is determined for each incident light beam 11 reflected by the reflective surfaces 3a, 3b in the direction of the design detection point 23a.

The polarization states of the light beams 11 can be given by the so-called Jones vectors, i.e., the amplitude of the vibrations of the light beam components and their phase angle, as is known to those skilled in the art. (If the phase differences of the Jones vectors X and Y are 0° or 180°, we speak of linear polarization, if 90°, we speak of circular polarization. In all other cases, it is called elliptical polarization.)

In an exemplary embodiment, one or both of the first and second reflective surfaces 3a, 3b are provided with a reflection layer 13 and/or an anti-reflection layer 14 designed for a particular type of linear polarization (S- or P), as already shown in connection with Figures 7 and 8. The reflections and transmissions on the surfaces 3a, 3b of the reflecting element 3 provided with the reflection layer 13 are as follows. For each material boundary, for each direction, a reflection and transmission coefficient can be determined, the so-called Fresnel coefficient. Thus, for a reflecting element 3 (e.g. glass), the following coefficients can be determined for the first surface 3a: $r_{12}, t_{12}, r_{21}, t_{21}$ and for the second surface 3b: $r_{23}, t_{23}, r_{32}, t_{32}$. The coefficients are complex numbers, depending on the angle of incidence and the complex refractive index of the material on both sides of the surface, as well as the structure of the thin film applied to the surface. Furthermore, the coefficients also depend on polarization and can be determined separately for S-polarization ($r_{12S}, t_{12S}, r_{21S}, t_{21S}, r_{23S}, t_{23S}, r_{32S}, t_{32S}$) and for P-polarization ($r_{12P}, t_{12P}, r_{21P}, t_{21P}, r_{23P}, t_{23P}, r_{32P}, t_{32P}$).

If the Jones vector of an incident beam is:

$$E_0 = \begin{pmatrix} X \\ Y \end{pmatrix}$$

and the intensity is:

$$I = |E_0|^2 = X^2 + Y^2$$

then for the first ($E_1$) and second ($E_2$) reflected beams we obtain the following Jones vectors:

$$E_1 = \begin{pmatrix} r_{12S} & 0 \\ 0 & -r_{12P} \end{pmatrix} \begin{pmatrix} X \\ Y \end{pmatrix}$$

$$E_2 = \begin{pmatrix} t_{21S} & 0 \\ 0 & t_{21P} \end{pmatrix} D \begin{pmatrix} r_{23S} & 0 \\ 0 & -r_{23P} \end{pmatrix} D \begin{pmatrix} t_{12S} & 0 \\ 0 & t_{12P} \end{pmatrix} \begin{pmatrix} X \\ Y \end{pmatrix}$$

where $D = \begin{pmatrix} e^{-\frac{4\pi\kappa}{\lambda_0}d} & 0 \\ 0 & e^{-\frac{4\pi\kappa}{\lambda_0}d} \end{pmatrix}$ is the matrix of propagation in the reflecting element 3.

The intensities of the reflected light beams 12a, 12b are respectively:

$$R_1 = |E_1|^2 = |X \cdot r_{12S}|^2 + |Y \cdot r_{12P}|^2$$

$$R_2 = |E_2|^2 = \left| X \cdot t_{12S} r_{23S} t_{21S} \cdot e^{-\frac{4\pi\kappa}{\lambda_0}2d} \right|^2 + \left| Y \cdot t_{12P} r_{23P} t_{21P} \cdot e^{-\frac{4\pi\kappa}{\lambda_0}2d} \right|^2$$

where d is the thickness of the reflecting element 3, $\kappa$ is the extinction coefficient of the material (e.g. glass) filling the space between the reflecting surfaces and $\lambda_0$ is the wavelength of the illuminating light beam.

The ghost image ratio is equal to the ratio of the lower intensity and the higher intensity:

$$CR_{ghost} = \frac{\min(R_1, R_2)}{\max(R_1, R_2)}$$

Near the Brewster angle, $CR_{ghost}$ will be minimal when $X = 0$ or when $Y = 0$. Which is exactly the condition for P-polarization or S-polarization, respectively. Hence, in this embodiment, the optimal polarization state determined for the light beams 11 is P-polarization or S-polarization, depending on the type of reflection layer 13 (or anti-reflection layer 14, respectively). Thus, the reflecting element 3 must be illuminated at each point with a P-polarized or S-polarized light beam 11 in order to keep the intensity ratio of the reflected light beams 12a, 12b to a minimum, i.e. to minimize the ghost image ratio. That is, the polarization axes of the linearly polarized light beams 11 must be set as a function of the orientation of the plane of incidence 10 of the given light beam 11, which can be individually determined taking into account the parameters of the HUD system (e.g. geometry, arrangement, etc. of the reflecting element 3), as will be apparent to one skilled in the art.

In another possible embodiment, the reflecting element 3 is provided with at least one optical birefringent layer 15 having an optical axis 150, which birefringent layer 15 is arranged in front of the second reflective surface 3b and in parallel therewith, as already described in connection with Figures 9, 10 and 18a, 18b. Embodiments using the birefringent layer 15 require an elliptically polarized light beam 11 to achieve the minimum ghost image ratio, the polarization of which, when approaching the reflecting element 3 obliquely and passing through the birefringent layer 15, undergoes a phase shift such that the beam 11 arrives at the second surface 3b in an S-polarized or P-polarized state. The ratio of the ghost image will thus be minimal.

When the reflecting element 3 is coated with a birefringent layer 15 on its first surface 3a, the formulas in the previous example are as follows:

$$E_0 = \begin{pmatrix} X \\ Y \end{pmatrix}$$

$$E_1 = \begin{pmatrix} r_{12S} & 0 \\ 0 & -r_{12P} \end{pmatrix} \begin{pmatrix} X \\ Y \end{pmatrix}$$

$$E_2 = \begin{pmatrix} t_{21S} & 0 \\ 0 & t_{21P} \end{pmatrix} L^{-1} \begin{pmatrix} e^{-\frac{4\pi\kappa}{\lambda_0}d} & 0 \\ 0 & e^{-\frac{4\pi\kappa}{\lambda_0}d} \end{pmatrix} \begin{pmatrix} r_{23S} & 0 \\ 0 & -r_{23P} \end{pmatrix} \begin{pmatrix} e^{-\frac{4\pi\kappa}{\lambda_0}d} & 0 \\ 0 & e^{-\frac{4\pi\kappa}{\lambda_0}d} \end{pmatrix} L \begin{pmatrix} t_{12S} & 0 \\ 0 & t_{12P} \end{pmatrix} \begin{pmatrix} X \\ Y \end{pmatrix}$$

where $L = \begin{pmatrix} \cos \Delta/2 - i \sin \Delta/2 \cos 2\phi & i \sin \Delta/2 \sin 2\phi \\ i \sin \Delta/2 \sin 2\phi & \cos \Delta/2 + i \sin \Delta/2 \cos 2\phi \end{pmatrix}$ $\Delta$ is the phase shift of the birefringent layer 15, which depends on the angle of incidence and the direction of the light beam 11. $\phi$ is the angle between the plane of incidence 10 and the optical axis 150, which also depends on the direction of the light beam 11. The intensities can be calculated similarly for this case:

$$I = |E_0|^2 = X^2 + Y^2$$

$$R_1 = |E_1|^2 = |X \cdot r_{12S}|^2 + |Y \cdot r_{12P}|^2$$

$$R_2 = |E_2|^2$$

In the design direction 21 $\Delta = \pi$ and $\phi = 45°$, so $L = \begin{pmatrix} 0 & i \\ i & 0 \end{pmatrix}$ and $L = \begin{pmatrix} 0 & -i \\ -i & 0 \end{pmatrix}$. Then $R_2$:

$$R_2 = |E_2|^2 = \left| X \cdot t_{12S} r_{23P} t_{21S} \cdot e^{-\frac{4\pi\kappa}{\lambda_0}2d} \right|^2 + \left| Y \cdot t_{12P} r_{23S} t_{21P} \cdot e^{-\frac{4\pi\kappa}{\lambda_0}2d} \right|^2$$

It can be seen that the S- and P-polarization reflection terms are reversed compared to the previous case. The ghost image ratio is:

$$CR_{ghost} = \frac{\min(R_1, R_2)}{\max(R_1, R_2)}$$

The reflection coefficient of the P-polarization is always smaller than that of the S-polarization ($r_P < r_s$) and the other way around for transmission ($t_P > t_s$), furthermore, at the Brewster angle $r_P = 0$ és $t_P = 1$, and near the Brewster angle $r_P \approx 0$ és $t_P \approx 1$. Therefore, the $CR_{ghost}$ ghost image ratio will be minimal when $X = 0$ or when Y = 0. Which is exactly the condition for P-polarization (then R1 <R2) or just S-polarization (then R1> R2). That is, in the design direction 21, the reflecting element 3 must be illuminated with one of these polarizations in order to minimize ghost image ratio. Other than the design direction 21, at other incidence angles 10, $\Delta = \pi$ és $\phi = 45°$ is not satisfied, and in the expression $CR_{ghost}$, the S- and P-polarization reflection terms are not simply interchanged, but a combination of them is obtained. Then the optimal polarization state can be determined by minimizing the expression:

$$CR_{ghost} = \frac{\min(R_1, R_2)}{\max(R_1, R_2)}$$

wherein

$$R_1 = |X \cdot r_{12S}|^2 + |Y \cdot r_{12P}|^2$$

and

$$R_2 = \left| X \cdot t_{12S}(a \cdot r_{23S} + b \cdot r_{23P})t_{21S} \cdot e^{-\frac{4\pi\kappa}{\lambda_0}2d} \right|^2$$

$$+ \left| Y \cdot t_{12P}(a \cdot r_{23P} + b \cdot r_{23S})t_{21P} \cdot e^{-\frac{4\pi\kappa}{\lambda_0}2d} \right|^2$$

and wherein a and b are complex numbers.

Note that the optimal polarization state that minimizes the $CR_{ghost}$ ghost image ratio is not necessarily linearly polarized, so the phases of X and Y will not necessarily be the same. If the phases of X and Y are not the same, we speak of elliptic polarization. Thus, in the method according to the invention, the polarization state of the light beam 11, i.e. the relative phases X and Y, is formed before reaching the reflecting element 3 in such a way to keep $CR_{ghost}$ to a minimum.

In the next step of the method according to the invention, the polarization states of the incident light beams 11 reflected by the reflective surfaces 3a, 3b in the direction of the design detection point 23a are set by means of a polarizing element 20 arranged in the path of the incident light beams 11 in accordance with the previously determined optimal polarization states. If the optimal polarization state was determined for a single representative light beam 11 instead of a plurality of light beams 11 originating from a given image area, then the polarization states of all the light beams originating from the given image area are set to correspond to the optimal polarization state determined for the representative light beam 11.

In the embodiment comprising the reflection layer 13, the optimal polarization states of the incident light beams 11 are created by the polarizing element 20 by linearly polarizing each of the incident light beams 11 reflected in the direction of the design detection point 23a such that each of the incident light beams 11 arriving at the first reflective surface 3a is S-polarized.

In the embodiment comprising the birefringent layer 15, the optimal polarization states of the incident light beams 11 are created by the polarizing element 20 by elliptically polarizing the incident light beams (11) reflected in the direction of the design detection point 23a such that each of the incident light beams 11 passing through the at least one optical birefringent layer 15 and arriving at the second reflective surface 3b is S-polarized or each is P-polarized.

In a particularly preferred embodiment, an LCD panel 34 with controllable pixels is provided as a polarizing element 20, and in the method the incident light beams 11 reflected towards the design detection point 23a are passed through the pixels of the LCD panel 34. The polarization states of the transmitted incident light beams 11 are set in accordance with the optimal polarization states previously determined by controlling the pixels. As is known to those skilled in the art, the pixels of the LCD panels 34 function as elementary polarizers, in which the optical axis and/or phase shift can be varied per pixel according to the desired polarization characteristic by controlling the voltages applied to each pixel, i.e. by controlling the LCD panel 34.

The inventors have recognized that the user may not always view the image created by the HUD system from the same position (e.g., leaning sideways while driving, etc.) or the user's eye position may for other reasons substantially differ from the design detection point 23a (for example the actual user has substantially different size than the average user for whom the design detection point 23a has been determined) . The HUD systems optimized for a fixed design detection point 23a may not work properly in this case, because the planes of incidence 10 of the light beams entering the user's eyes are rotated from their previous position, so that the previously determined optimal polarization states of the light beams 11 will no longer provide the minimum ghost image ratio. The advantage of the LCD panel 34 is that its polarization properties can be modified dynamically, so that the polarization states of the light beams 11 passing through a given pixel can be set as desired. Therefore, in a particularly preferred embodiment, the design detection point 23a is selected in accordance with the current observation position of the user using the HUD system. In other words, the point 23a is adjusted in real time to the user's current observation position, preferably to a point located half way between the two eyes of the user, and the optimal polarization states of the light beams 11 reflected towards the currently determined point 23a are determined accordingly. By controlling the LCD panel 34, the polarization properties of the light beams 11 passing through it are set according to the optimal polarization conditions thus determined. The current observation position of the user can be determined, for example, by observing the user with one or more cameras using face recognition and motion tracking algorithms known per se, as will be apparent to those skilled in the art.

The invention further relates to a polarizing element 20 configured to carry out the method according to the invention. The polarizing element 20 according to the invention is adapted to modify the polarization properties of the light beams 11 arriving at the reflecting element 3 and defining the projected image, as a function of the vertical and horizontal angles $\alpha_V$, $\alpha_H$ between the given light beam 11 and the design direction 21 as an optical axis.

In an exemplary embodiment, in which the reflecting element 3 is preferably provided with a reflection layer 13 and/or an anti-reflection layer 14, the polarizing element 20 is a linear polarizing filter having several polarization axes, wherein the directions of the polarization axes at different points of the polarization filter are different. Preferably, the polarizing element 20 has a substantially flat surface. Such an arrangement can be seen, for example, in Figures 17b and 20c, in which the polarizing element 20 arranged in the path of light beams 11 coming from the image display device 1 and passed through a linear polarizer 19 is configured so that its polarization axis varies from point to point and accordingly, the polarization axes of the transmitted light beams 11 also vary according to the exit positions of the light beams 11. Thus, in this example, the light beams 11 passed through the polarizing element 20 will be linearly polarized light beams with different polarization axes, which, depending on the design of the reflecting element 3 (see below), reach the different points of the surfaces 3a, 3b of the reflecting element 3 as purely S-polarized or purely P-polarized beams. The optimal polarization states to be created by the polarizing element 20 depend on the design of the reflecting element 3. For example, if the first surface 3a of the reflecting element 3 is provided with a reflection layer 13 having a higher reflection for S-polarization than for P-polarization and the second surface 3b is provided with an anti-reflection layer 14 with a low reflection for both polarizations, then the light beams 11 arriving at the reflecting element 3 must be substantially purely S-polarized beams. Similarly, when the second surface 3b of the reflecting element 3 is coated with a reflection layer 13 having a higher reflection for S-polarization than for P-polarization, and the first surface 3a is coated with an anti-reflection layer 14 having a low reflection for both polarizations, the light beams 11 coming to the reflecting element 3 are also purely S-polarized rays. If, on the other hand, the first surface 3a of the reflecting element 3 is coated with a reflection layer 13 having a higher reflection for P-polarization than for S-polarization and the second surface 3b is coated with an anti-reflection layer 14 with a low reflection for both polarizations, the light beams 11 arriving at the reflecting element 3 are substantially purely P-polarized beams. Finally, if the second surface 3b of the reflecting element 3 is coated with a reflection layer 13 having a higher reflection for P-polarization than for S-polarization and the first surface 3a with an anti-reflection layer 14 with a low reflection for both polarizations, the rays arriving at the reflecting element 3 must also be purely P-polarized beams.

In another exemplary embodiment, in which the reflecting element 3 is provided with at least one birefringent layer 15, the polarizing element 20 is an optical birefringent element having several optical axes, the phase shifts of which are different at different points of the birefringent element and which modulates the polarization properties of the light beams passing through its surface differently depending on the location of incidence in such a way as to ensure that the transmitted light beams 11 become elliptically polarized beams having predetermined polarization directions. That is, the light from the image display device 1, which is preferably linearly polarized, is modulated by the polarizing element 20 with different degrees of phase shift at different locations in accordance with the optimal polarization states to be achieved. Note that the ellipticity of the produced elliptically polarized beams can be varied as needed between linear polarization and circular polarization, as mentioned earlier in connection with Jones vector formalism.

Polarizing elements 20 of different shapes can be used between the image display device 1 or its linear polarizer 19 and the reflecting element 3 as polarization modulators in the HUD system according to the invention, depending on the birefringent layer 15 used in the reflecting element 3 and the polarization direction (S or P) of the light entering the reflecting element 3. That is, the polarizing element 20 can be formed as a flat or optionally curved surface, as shown in Figures 20b and 20d. The exact shape of the polarizing element 20 formed as a birefringent layer depends primarily on the distance between the observer and the polarizing element 20 and the shape of the reflecting element 3. For example, if the light entering the reflecting element 3 is P-polarized light, the polarizing element 20 used as a polarizing modulator preferably defines a substantially flat surface. If, on the other hand, the light arriving at the reflecting element 3 is S-polarized light, the polarizing element 20 preferably defines a non-planar curved surface (see Figures 19b and 20b), the exact arc of which can be determined, for example, by numerical simulation. The linearly polarized beam arriving at the curved surface travels as different elliptically polarized light beams 11 due to the inclined angle of incidence, the inclined optical axis and the inclined polarization plane. In such an embodiment, the radius of curvature R of the arc is preferably half the distance A + B between the polarizing element 20 and the design detection point 23a, and the point of intersection of the radii of curvature R is on the side of the polarizing element 20 facing the reflecting element 3, as shown in Fig. 19c.

In a preferred embodiment shown in Fig. 19b, the polarizing element 20 is a birefringent element, the optical axis 150' of which forms an angle of substantially 90 degrees with the optical axis 150 of the birefringent layer of the reflecting element 3. By adjusting the two optical axes 150, 150' perpendicular to each other (one rotated by +45° from the vertical axis of symmetry and the other by -45°), the wavelength dependence can be reduced, so that an achromatic behaviour can be achieved. This is because the birefringent layers are designed for a certain wavelength. At different wavelengths, the light beam will suffer a different phase shift and the system will be colour-fringed. With the optical axes 150, 150' which are perpendicular to each other, the amount of error carried by the light beam after passing through the polarizing element 20 formed as a birefringent layer is compensated by the birefringent layer 15 arranged on the reflecting element 3.

In a particularly preferred embodiment shown in Fig. 20e, the polarizing element 20 is an LCD panel 34 with separately controllable pixels, for producing both linearly polarized and elliptically polarized beams of any axis, and the polarizing properties of which can be modified dynamically by controlling the voltages applied to the pixels. In the embodiment shown in Fig. 20e, the optical element arranged in the path of a preferably pre-linearly polarized light produced by the image display device 1 is a controllable LCD panel 34 designed and controlled in such a way that the phase shift can be varied from point to point according to the desired polarization characteristic. A polarization filter is not required for this arrangement because the liquid crystal pixels of the LCD panel 34 are used to modulate the polarization. By controlling the pixels, we do not change the brightness as with a conventional LCD display, but the polarization of the transmitted light point by point. The linearly polarized light coming from the linear polarizer 19 can thus be modulated in each direction by controlling the pixels. The LCD panel 34 is essentially a controllable version of the polarizing element 20 of Figure 20d, since the optical axes of the birefringent liquid crystals in the LCD panel 34 are rotatable to the desired extent. The parameters required to control LCD pixels can be determined by measurement or modelling.

The invention further relates to a HUD system comprising a polarizing element 20 according to the invention. The HUD system comprises an image display device 1 and a reflecting element 3 having a partially translucent first reflective surface 3a and at least one substantially parallel, partially translucent second reflective surface 3b, as well as a polarization-dependent reflection layer 13 and/or an anti-reflection layer 14 and/or an optical birefringent layer 15. In a particularly preferred embodiment, the reflective element 3 is a windscreen of a vehicle, wherein the first reflective surface 3a is the inner surface of the windscreen and the second reflective surface 3b is the outer surface of the windscreen. The image display device 1 is preferably a digital projector or digital screen known per se. Optionally, additional optical deflectors, such as the first mirror 17 and/or the second mirror 18 shown in Fig. 17b, are arranged between the image display device 1 and the reflecting element 3, as will be apparent to those skilled in the art.

In a preferred embodiment, the HUD system comprises a reflecting element 3 having a first optical birefringent layer 15 with an optical axis 150 and a polarizing element 20 formed as a second birefringent element with an optical axis 150', which first and second optical axes 150, 150' are at an angle of substantially 90 degrees to each other. In a particularly preferred embodiment shown in Fig. 22, the polarizing element 20 is an LCD panel 34 and the HUD system comprises one or more digital cameras 40 for determining the user's current observation position and a central IT unit 50 in communication therewith, wherein said central IT unit 50 is configured to control the LCD panel 34. The term central IT unit 50 is to be interpreted broadly as used herein to include any hardware device capable of receiving, processing, and preferably storing digital data. In one possible example, the central IT unit 50 is a computer comprising a storage medium for storing computer programs and data received from the digital camera 40, and a central processing unit (processor) for processing the received data and running computer programs. Face recognition and motion tracking algorithms known per se may be run on the central IT unit 50, which identify the current spatial position of the user's face based on the image information provided by the one or more cameras 40, thereby determining the current detection point 23a. Knowing the location of the point 23a, the planes of incidence 10 through which the light beams 12a, 12b reflected from the reflecting element 3 and reach the user's eyes can be determined, i.e. the optimal polarization states of the light beams 11 with minimum ghost image ratio can also be determined by means of the central IT unit 50. By properly controlling the LCD panel 34 arranged in the path of the light beams 11, the optimal polarization states can be set.

Figures 21a-c show the ghost image ratios produced by a conventional HUD system and a HUD system of the present invention. As previously described, for the HUD system of Figure 19a or 20a, the range that can be considered ghost image free ($CR_{ghost}$ < 3%) is very limited (approximately +/- 9° in the vertical direction and +/- 7° in the horizontal direction), as it is clearly seen in Fig. 21a. In contrast, in the case of the HUD according to the invention shown in Fig. 20b, the range considered to be ghost image free ($CR_{ghost}$ < 3%) expands significantly (+/- 9° in the vertical direction and +/- 25° in the horizontal direction), as can be clearly seen in Fig. 21b. The ghost image ratio of the HUD system resulted by the embodiments 20c, 20d and 20e is shown in Fig. 21c. With these HUD designs, the ghost image free range is further improved (more than +/- 30° in the vertical direction at +/- 9° in the vertical direction), as can be clearly seen in Figure 21c.

As is clear from the above description, the present invention significantly reduces the ghost image ratio or increases the range considered to be ghost image free in HUD systems operating on the polarization principle. The proposed solution is compatible with the existing systems, moreover new HUD devices with significantly larger image sizes can be implemented. In some cases, the so-called AR (augmented reality) experience can also be created, as the horizon seen for the driver can be completely covered. The new solution can also be combined with P polarization HUD systems (which also work in polarizing sunglasses) with great advantage. Of course, the solution is not only applicable in motor vehicles, but e.g. also on the windscreens of airplanes, ships, etc.

Various modification to the above disclosed embodiment will be apparent to a person skilled in the art without departing from the scope of protection determined by the attached claims.

## Claims

1. A method for improving the image quality of a HUD system, especially for reducing ghost images of the HUD system, the HUD system comprising an image display device (1) and a reflecting element (3) having a partially transmissive first reflective surface (3a) and at least one partially transmissive second reflective surface (3b) substantially parallel thereto, and a layer selected from a group consisting of polarization-dependent reflection layer (13) anti-reflection layer (14) and optical birefringent layer (15), wherein the second reflective surface (3b) is on the side of the first reflective surface (3a) opposite the image display device (1) and wherein the reflecting element (3) is adapted to produce reflected light beams (12a, 12b) from incident light beams (11) originating from different points of an image generated by the image display device (1) and being incident on the reflective surfaces (3a, 3b) and to reflect at least a portion of the reflected light beams (12a, 12b) toward a design detection point (23a), **characterized by**

   - determining for each of the incident light beams (11) reflected by the reflecting element (3) in the direction of the design detection point (23a) an optimal polarization state for which an intensity ratio of the reflected light beams (12a, 12b) is minimal during the reflection of the given incident light beam (11), which intensity ratio is calculated by dividing a minimum of an intensity of the reflected light beam (12a) first reflected by the first reflective surface (3a) and an intensity of the reflected light beam (12b) first reflected by the second reflective surface (3b) by a maximum of the two said intensities, and
   - setting the polarization state of each of the incident light beams (11) reflected by the reflecting element (3) in the direction of the design detection point (23a) by means of a polarizing element (20) arranged in a path of the incident light beams (11) in accordance with the previously determined optimal polarization states.

2. The method according to claim 1, **characterized by** modifying a reflection coefficient of at least one of the first and second reflective surfaces (3a, 3b) with said layer which is selected from the polarization-dependent reflection layer (13) and the anti-reflection layer (14) and the optimal polarization states of the incident light beams (11) are created by means of the polarizing element (20) by linearly polarizing each of the incident light beams (11) reflected in the direction of the design detection point (23a) such that each of the incident light beams (11) arriving at the reflective surface (3a, 3b) having the modified reflection coefficient is S-polarized or P-polarized, depending on a type of said layer.

3. The method according to claim 1, **characterized by** providing the reflecting element (3) with at least one optical birefringent layer (15) having an optical axis (150) which birefringent layer (15) is arranged in front of the second reflective surface (3b) and parallel therewith and the optimal polarization states of the incident light beams (11) are created by means of the polarizing element (20) by elliptically polarizing the incident light beams (11) reflected in the direction of the design detection point (23a) such that each of the incident light beams (11) passing through the at least one optical birefringent layer (15) and arriving at the second reflective surface (3b) is S-polarized or each is P-polarized.

4. The method according to any one of claims 1 to 3, **characterized by** providing an LCD panel (34) with controllable pixels as the polarizing element (20), passing the incident light beams (11) through the pixels of the LCD panel (34) and setting the polarization states of the transmitted incident light beams (11) in accordance with the previously determined optimal polarization states by controlling the pixels.

5. The method according to claim 4, **characterized by** providing at least one digital camera, using the camera to detect a current observation position of a user of the HUD system, selecting the design detection point (23a) according to the current observation position of the user and using the selected design detection point (23a) to determine the optimal polarization states.

6. HUD system comprising an image display device (1) and a reflecting element (3) having a partially transmissive first reflective surface (3a) and at least one partially transmissive second reflective surface (3b) substantially parallel thereto, and a layer selected from a group consisting of a polarization-dependent reflection layer (13) an anti-reflection layer (14) and an optical birefringent layer (15), wherein the second reflective surface (3b) is on a side of the first reflective surface (3a) opposite the image display device (1) and wherein the reflecting element (3) is adapted to produce reflected light beams (12a, 12b) from incident light beams (11) originating from different points of an image generated by the image display device (1) and being incident on the reflective surfaces (3a, 3b) and to reflect at least a portion of the reflected light beams (12a, 12b) toward a design detection point (23a), and said reflecting element (3) is arranged relative to the image display device (1) in such a way that a part of the incident light beams (11) reflected towards the design detection point (23a) reaches the first reflective surface (3a) at a Brewster angle, **characterized in that** it comprises a polarizing element (20) arranged in a light path between the image display device (1) and the reflecting element (3) for adjusting the polarization state of each of the incident light beams (11) reflected by the reflecting element (3) towards the design detection point (23a) in such a way that during the reflection of the given incident light beam (11) passing through the polarizing element (20), the intensity ratio is minimal, which intensity ratio is calculated by dividing a minimum of an intensity of the reflected light beam first reflected by the first reflective surface and an intensity of the reflected light beam first reflected by the second reflective surface by a maximum of the two said intensities.

7. The HUD system according to claim 6, **characterized in that** it comprises a reflecting element (3) having an optical birefringent layer (15) with a first optical axis (150) and a polarizing element (20) being a birefringent element with a second optical axis (150'), wherein the first and second optical axes (150, 150') are at an angle of substantially 90 degrees to each other.

8. The HUD system according to claim 6 or 7, **characterized in that** the polarizing element (20) is an LCD panel (34) and the HUD system comprises one or more digital cameras (40) for determining a current observation position of a user of the HUD system and it further comprises a central IT unit (50) connected thereto, wherein the central IT unit (50) is configured to control the LCD panel (34).

9. The HUD system according to any one of claims 6 to 8, **characterized in that** the image display device (1) is a digital projector or a digital display.

10. The HUD system according to any one of claims 6 to 9, **characterized in that** the reflecting element (3) is a vehicle windscreen, wherein the first reflective surface (3a) is the inner surface of the windscreen and the second reflective surface (3b) is the outer surface of the windscreen.

**Patentansprüche**

1. Verfahren zur Verbesserung der Bildqualität eines HUD-Systems, insbesondere zur Verringerung von Geisterbildern des HUD-Systems, wobei das HUD-System eine Bildanzeigevorrichtung (1) und ein Reflexionselement (3) mit einer teilweise transmissiven ersten Reflexionsfläche (3a) und mindestens einer dazu im Wesentlichen parallelen, teilweise transmissiven zweiten Reflexionsfläche (3b) sowie einer aus einer Gruppe bestehend aus einer polarisationsabhängigen Reflexionsschicht (13), einer Antireflexionsschicht (14) und einer optisch doppelbrechenden Schicht (15) ausgewählten Schicht umfasst, wobei die zweite Reflexionsfläche (3b) auf der der Bildanzeigevorrichtung (1) gegenüberliegenden Seite der ersten Reflexionsfläche (3a) ist, und wobei das Reflexionselement (3) so ausgebildet ist, aus einfallenden Lichtstrahlen (11), die von verschiedenen Punkten eines von der Bildanzeigevorrichtung (1) erzeugten Bildes ausgehen und auf die Reflexionsflächen (3a, 3b) einfallen, reflektierte Lichtstrahlen (12a, 12b) zu erzeugen und mindestens einen Teil der reflektierten Lichtstrahlen (12a, 12b) zu einem Auslegungserfassungspunkt (23a) zu reflektieren, **dadurch gekennzeichnet, dass**

- für jeden der einfallenden Lichtstrahlen (11), der durch das Reflexionselement (3) in Richtung des Auslegungserfassungspunktes (23a) reflektiert wird, ein optimaler Polarisationszustand bestimmt wird, bei dem ein Intensitätsverhältnis der reflektierten Lichtstrahlen (12a, 12b) während der Reflexion des jeweiligen einfallenden Lichtstrahls (11) minimal ist, wobei das Intensitätsverhältnis berechnet wird, indem das Minimum aus einer Intensität des reflektierten Lichtstrahls (12a), der zuerst an der ersten Reflexionsfläche (3a) reflektiert wird, und einer Intensität des reflektierten Lichtstrahls (12b), der zuerst an der zweiten Reflexionsfläche (3b) reflektiert wird, durch das Maximum der beiden genannten Intensitäten dividiert wird, und

- der Polarisationszustand jedes der einfallenden Lichtstrahlen (11), der durch das Reflexionselement (3) in Richtung des Auslegungserfassungspunktes (23a) reflektiert wird, mittels eines in einem Strahlengang der einfallenden Lichtstrahlen (11) angeordneten Polarisierungselements (20) entsprechend den zuvor bestimmten optimalen Polarisationszuständen eingestellt wird.

2. Verfahren nach Anspruch 1, **dadurch gekennzeichnet, dass** ein Reflexionskoeffizient mindestens einer der ersten und zweiten Reflexionsflächen (3a, 3b) mit der genannten Schicht modifiziert wird, wobei die Schicht aus der polarisationsabhängigen Reflexionsschicht (13) und der Antireflexionsschicht (14) ausgewählt ist, und dass die optimalen Polarisationszustände der einfallenden Lichtstrahlen (11) mittels des Polarisierungselements (20) dadurch erzeugt werden, dass jeder der in Richtung des Auslegungserfassungspunktes (23a) reflektierten einfallenden Lichtstrahlen (11) linear polarisiert wird, sodass jeder der an der Reflexionsfläche (3a, 3b) mit dem modifizierten Reflexionskoeffizienten ankommenden einfallenden Lichtstrahlen (11) S-polarisiert oder P-polarisiert ist, abhängig von einem Typ der genannten Schicht.

3. Verfahren nach Anspruch 1, **dadurch gekennzeichnet, dass** das Reflexionselement (3) mit mindestens einer optisch doppelbrechenden Schicht (15) mit einer optischen Achse (150) versehen wird, wobei die doppelbrechende Schicht (15) vor der zweiten Reflexionsfläche (3b) und parallel dazu angeordnet ist, und dass die optimalen Polarisationszustände der einfallenden Lichtstrahlen (11) mittels des Polarisierungselements (20) dadurch erzeugt werden, dass die in Richtung des Auslegungserfassungspunktes (23a) reflektierten einfallenden Lichtstrahlen (11) elliptisch polarisiert werden, sodass jeder der einfallenden Lichtstrahlen (11), der durch die mindestens eine optisch doppelbrechende Schicht (15) hindurchtritt und an der zweiten Reflexionsfläche (3b) ankommt, S-polarisiert ist oder jeder P-polarisiert ist.

4. Verfahren nach einem der Ansprüche 1 bis 3, **dadurch gekennzeichnet, dass** ein LCD-Panel (34) mit steuerbaren Pixeln als Polarisierungselement (20) bereitgestellt wird, dass die einfallenden Lichtstrahlen (11) durch die Pixel des LCD-Panels (34) hindurchgeführt werden, und dass die Polarisationszustände der hindurchtretenden einfallenden Lichtstrahlen (11) entsprechend den zuvor bestimmten optimalen Polarisationszuständen durch Ansteuern der Pixel eingestellt werden.

5. Verfahren nach Anspruch 4, **dadurch gekennzeichnet, dass** mindestens eine Digitalkamera (40) bereitgestellt wird, dass mittels der Digitalkamera (40) eine aktuelle Beobachtungsposition eines Benutzers des HUD-Systems erfasst wird, dass der Auslegungserfassungspunkt (23a) entsprechend der aktuellen Beobachtungsposition des Benutzers ausgewählt wird, und dass der ausgewählte Auslegungserfassungspunkt (23a) zum Bestimmen der optimalen Polarisationszustände verwendet wird.

6. HUD-System, umfassend eine Bildanzeigevorrichtung (1) und ein Reflexionselement (3) mit einer teilweise transmissiven ersten Reflexionsfläche (3a) und mindestens einer dazu im Wesentlichen parallelen, teilweise transmissiven zweiten Reflexionsfläche (3b) sowie einer aus einer Gruppe bestehend aus einer polarisationsabhängigen Reflexionsschicht (13), einer Antireflexionsschicht (14) und einer optisch doppelbrechenden Schicht (15) ausgewählten Schicht, wobei die zweite Reflexionsfläche (3b) auf einer der Bildanzeigevorrichtung (1) gegenüberliegenden Seite der ersten Reflexionsfläche (3a) ist, und wobei das Reflexionselement (3) so ausgebildet ist, aus einfallenden Lichtstrahlen (11), die von verschiedenen Punkten eines von der Bildanzeigevorrichtung (1) erzeugten Bildes ausgehen und auf die Reflexionsflächen (3a, 3b) einfallen, reflektierte Lichtstrahlen (12a, 12b) zu erzeugen und mindestens einen Teil der reflektierten Lichtstrahlen (12a, 12b) zu einem Auslegungserfassungspunkt (23a) zu reflektieren, und wobei das Reflexionselement (3) relativ zur Bildanzeigevorrichtung (1) derart angeordnet ist, dass ein Teil der in Richtung des Auslegungserfassungspunktes (23a) reflektierten einfallenden Lichtstrahlen (11) die erste Reflexionsfläche (3a) unter einem Brewster-Winkel erreicht, **dadurch gekennzeichnet, dass** es ein zwischen der Bildanzeigevorrichtung (1) und dem Reflexionselement (3) in einem Lichtweg angeordnetes Polarisierungselement (20) zur Einstellung des Polarisationszustands jedes der durch das Reflexionselement (3) in Richtung des Auslegungserfassungspunktes (23a) reflektierten einfallenden Lichtstrahlen (11) umfasst, und zwar derart, dass während der Reflexion des jeweiligen einfallenden Lichtstrahls (11), der durch das Polarisierungselement (20) hindurchtritt, das Intensitätsverhältnis minimal ist, wobei das Intensitätsverhältnis berechnet wird, indem das Minimum aus einer Intensität des reflektierten Lichtstrahls, der zuerst an der ersten Reflexionsfläche reflektiert wird, und einer Intensität des reflektierten Lichtstrahls, der zuerst an der zweiten Reflexionsfläche reflektiert wird, durch das Maximum der beiden genannten Intensitäten dividiert wird.

7. HUD-System nach Anspruch 6, **dadurch gekennzeichnet, dass** es ein Reflexionselement (3) mit einer optisch doppelbrechenden Schicht (15) mit einer ersten optischen Achse (150) und ein Polarisierungselement (20) in Form eines doppelbrechenden Elements mit einer zweiten optischen Achse (150') umfasst, wobei die erste und die zweite optische Achse (150, 150') in einem Winkel von im Wesentlichen 90 Grad zueinander stehen.

8. HUD-System nach Anspruch 6 oder 7, **dadurch gekennzeichnet, dass** das Polarisierungselement (20) ein LCD-Panel (34) ist und dass das HUD-System eine oder mehrere Digitalkameras (40) zum Bestimmen einer aktuellen Beobachtungsposition eines Benutzers des HUD-Systems umfasst und ferner eine damit verbundene zentrale IT-Einheit (50) umfasst, wobei die zentrale IT-Einheit (50) dazu ausgebildet ist, das LCD-Panel (34) anzusteuern.

9. HUD-System nach einem der Ansprüche 6 bis 8, **dadurch gekennzeichnet, dass** die Bildanzeigevorrichtung (1) ein digitaler Projektor oder ein digitales Anzeigegerät ist.

10. HUD-System nach einem der Ansprüche 6 bis 9, **dadurch gekennzeichnet, dass** das Reflexionselement (3) eine Fahrzeugwindschutzscheibe ist, wobei die erste Reflexionsfläche (3a) die Innenseite der Windschutzscheibe ist und die zweite Reflexionsfläche (3b) die Außenseite der Windschutzscheibe ist.

## Revendications

1. Procédé d'amélioration de la qualité d'image d'un système HUD, en particulier de réduction d'images fantômes du système HUD, le système HUD comprenant un dispositif d'affichage d'image (1) et un élément réfléchissant (3) ayant une première surface réfléchissante (3a) partiellement transmissive et au moins une deuxième surface réfléchissante (3b) partiellement transmissive sensiblement parallèle à celle-ci, et une couche sélectionnée dans un groupe constitué d'une couche de réflexion dépendant de la polarisation (13), d'une couche antireflet (14) et d'une couche optique biréfringente (15), dans lequel la deuxième surface réfléchissante (3b) est disposée du côté de la première surface réfléchissante (3a) opposé au dispositif d'affichage d'image (1) et dans lequel l'élément réfléchissant (3) est apte à produire des rayons lumineux réfléchis (12a, 12b) à partir de rayons lumineux incidents (11) provenant de différents points d'une image générée par le dispositif d'affichage d'image (1) et incidents sur les surfaces réfléchissantes (3a, 3b), et à réfléchir au moins une partie des rayons lumineux réfléchis (12a, 12b) vers un point de détection de conception (23a), **caractérisé en ce que**:

   - on détermine, pour chacun des rayons lumineux incidents (11) réfléchis par l'élément réfléchissant (3) dans la direction du point de détection de conception (23a), un état de polarisation optimal pour lequel un rapport d'intensité des rayons lumineux réfléchis (12a, 12b) est minimal lors de la réflexion du rayon lumineux incident (11) considéré, ledit rapport d'intensité étant calculé en divisant un minimum entre une intensité du rayon lumineux réfléchi (12a) d'abord réfléchi par la première surface réfléchissante (3a) et une intensité du rayon lumineux réfléchi (12b) d'abord réfléchi par la deuxième surface réfléchissante (3b) par un maximum des deuxdites intensités; et
   - on règle l'état de polarisation de chacun des rayons lumineux incidents (11) réfléchis par l'élément réfléchissant (3) dans la direction du point de détection de conception (23a) au moyen d'un élément polarisant (20) disposé sur un trajet des rayons lumineux incidents (11), conformément aux états de polarisation optimaux déterminés précédemment.

2. Procédé selon la revendication 1, **caractérisé en ce que** l'on modifie un coefficient de réflexion d'au moins l'une des première et deuxième surfaces réfléchissantes (3a, 3b) au moyen de ladite couche, laquelle est sélectionnée parmi la couche de réflexion dépendant de la polarisation (13) et la couche antireflet (14), et **en ce que** les états de polarisation optimaux des rayons lumineux incidents (11) sont créés au moyen de l'élément polarisant (20) en polarisant linéairement chacun des rayons lumineux incidents (11) réfléchis dans la direction du point de détection de conception (23a), de sorte que chacun des rayons lumineux incidents (11) arrivant sur la surface réfléchissante (3a, 3b) ayant le coefficient de réflexion modifié est polarisé S ou polarisé P, en fonction d'un type de ladite couche.

3. Procédé selon la revendication 1, **caractérisé en ce que** l'on pourvoit l'élément réfléchissant (3) d'au moins une couche optique biréfringente (15) ayant un axe optique (150), ladite couche biréfringente (15) étant disposée devant la deuxième surface réfléchissante (3b) et parallèle à celle-ci, et **en ce que** les états de polarisation optimaux des rayons lumineux incidents (11) sont créés au moyen de l'élément polarisant (20) en polarisant elliptiquement les rayons lumineux incidents (11) réfléchis dans la direction du point de détection de conception (23a), de sorte que chacun des rayons lumineux incidents (11) traversant l'au moins une couche optique biréfringente (15) et arrivant sur la deuxième surface réfléchissante (3b) est polarisé S ou que chacun est polarisé P.

4. Procédé selon l'une quelconque des revendications 1 à 3, **caractérisé en ce que** l'on prévoit un panneau LCD (34) à pixels commandables en tant qu'élément polarisant (20), que l'on fait traverser les rayons lumineux incidents (11) à travers les pixels du panneau LCD (34), et que l'on règle les états de polarisation des rayons lumineux incidents (11) transmis conformément aux états de polarisation optimaux déterminés précédemment en commandant les pixels.

5. Procédé selon la revendication 4, **caractérisé en ce que** l'on prévoit au moins une caméra numérique, que l'on utilise la caméra numérique pour détecter une position d'observation actuelle d'un utilisateur du système HUD, que l'on sélectionne le point de détection de conception (23a) en fonction de la position d'observation actuelle de l'utilisateur, et que l'on utilise le point de détection de conception (23a) sélectionné pour déterminer les états de polarisation optimaux.

6. Système HUD comprenant un dispositif d'affichage d'image (1) et un élément réfléchissant (3) ayant une première surface réfléchissante (3a) partiellement transmissive et au moins une deuxième surface réfléchissante (3b) partiellement transmissive sensiblement parallèle à celle-ci, et une couche sélectionnée dans un groupe constitué d'une couche de réflexion dépendant de la polarisation (13), d'une couche antireflet (14) et d'une couche optique biréfringente (15), dans lequel la deuxième surface réfléchissante (3b) est disposée du côté de la première surface réfléchissante (3a) opposé au dispositif d'affichage d'image (1) et dans lequel l'élément réfléchissant (3) est apte à produire des rayons lumineux réfléchis (12a, 12b) à partir de rayons lumineux incidents (11) provenant de différents points d'une image générée par le dispositif d'affichage d'image (1) et incidents sur les surfaces réfléchissantes (3a, 3b), et à réfléchir au moins une partie des rayons lumineux réfléchis (12a, 12b) vers un point de détection de conception (23a), et ledit élément réfléchissant (3) est disposé par rapport au dispositif d'affichage d'image (1) de telle sorte qu'une partie des rayons lumineux incidents (11) réfléchis vers le point de détection de conception (23a) atteint la première surface réfléchissante (3a) sous un angle de Brewster, **caractérisé en ce qu'**il comprend un élément polarisant (20) disposé sur un trajet optique entre le dispositif d'affichage d'image (1) et l'élément réfléchissant (3) pour ajuster l'état de polarisation de chacun des rayons lumineux incidents (11) réfléchis par l'élément réfléchissant (3) vers le point de détection de conception (23a) de telle sorte que, lors de la réflexion du rayon lumineux incident (11) considéré traversant l'élément polarisant (20), le rapport d'intensité est minimal, ledit rapport d'intensité étant calculé en divisant un minimum entre une intensité du rayon lumineux réfléchi d'abord réfléchi par la première surface réfléchissante et une intensité du rayon lumineux réfléchi d'abord réfléchi par la deuxième surface réfléchissante par un maximum des deuxdites intensités.

7. Système HUD selon la revendication 6, **caractérisé en ce qu'**il comprend un élément réfléchissant (3) ayant une couche optique biréfringente (15) avec un premier axe optique (150) et un élément polarisant (20) étant un élément biréfringent avec un deuxième axe optique (150'), dans lequel les premier et deuxième axes optiques (150, 150') forment entre eux un angle d'environ 90 degrés.

8. Système HUD selon la revendication 6 ou 7, **caractérisé en ce que** l'élément polarisant (20) est un panneau LCD (34) et le système HUD comprend une ou plusieurs caméras numériques (40) pour déterminer une position d'observation actuelle d'un utilisateur du système HUD et il comprend en outre une unité informatique centrale (50) qui y est connectée, l'unité informatique centrale (50) étant configurée pour commander le panneau LCD (34).

9. Système HUD selon l'une quelconque des revendications 6 à 8, **caractérisé en ce que** le dispositif d'affichage d'image (1) est un projecteur numérique ou un dispositif d'affichage numérique.

10. Système HUD selon l'une quelconque des revendications 6 à 9, **caractérisé en ce que** l'élément réfléchissant (3) est un pare-brise de véhicule, dans lequel la première surface réfléchissante (3a) est la surface intérieure du pare-brise et la deuxième surface réfléchissante (3b) est la surface extérieure du pare-brise.

**Fig. 1**

EP 4 078 272 B1

Fig. 3

Fig. 2

R

1.0
0.8
0.6
0.4
0.2
0.016
0.0

$R_P$

$R_S$

$\Theta_B$

3
10
12
11

P
S

$\theta$ $\theta$

0° 10° 20° 30° 40° 50° 57° 60° 70° 80° 90° $\theta$

**Fig. 4**

20

Fig. 5

Fig. 6

$I_3 = 0.0000$

$I_2 = 0.0028$

$I_1 = 0.1123$

$I_0 = 0.1587$

$I = 1$

$I_1 = 0.0000$

$I_0 = 0.0000$

$I = 1$

EP 4 078 272 B1

Fig. 8

$(I_1 > I_0)$

$I_1$

$I_0$

$3$

$13$

$14$

Fig. 7

$(I_1 < I_0)$

$I_1$

$I_0$

$3$

$13$

$14$

**Fig. 9**

**Fig. 10**

EP 4 078 272 B1

Fig. 11

Fig. 12

EP 4 078 272 B1

**Fig. 13**

**Fig. 14**

EP 4 078 272 B1

**Fig. 15**

EP 4 078 272 B1

**Fig. 16a**

**Fig. 16b**

EP 4 078 272 B1

**Fig. 17b**

**Fig. 17a**

**Fig. 18a**

**Fig. 18b**

EP 4 078 272 B1

**Fig. 19a**

**Fig. 19b**

EP 4 078 272 B1

EP 4 078 272 B1

**Fig. 19c**

Fig. 20a

Fig. 20b

Fig. 20c

Fig. 20d

**Fig. 20e**

Fig. 21a

Fig. 21b

**Fig. 21c**

**Fig. 22**

EP 4 078 272 B1

**EP 4 078 272 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10416447 B2
- EP 0424950 A2
- US 7839574 B2
- US 7123418 B2
- US 6952312 B2
- US 5999314 A